# EUROPEAN PATENT APPLICATION

(11) **EP 4 429 308 A1**
(43) Date of publication of application: **11.09.2024**
(21) Application number: 22900477.5
(22) Date of filing: 29.11.2022
(51) Int. Cl.: H04W 24/02, H04L 67/10

(54) **TASK PROCESSING METHOD AND APPARATUS**

(30) Priority: 30.11.2021 CN 202111447709
(71) Applicant: Huawei Technologies Co., Ltd., Shenzhen, Guangdong 518129 (CN)
(72) Inventor: WANG, Jun, Shenzhen, Guangdong 518129 (CN); PENG, Chenghui, Shenzhen, Guangdong 518129 (CN); WU, Shaoyun, Shenzhen, Guangdong 518129 (CN); WU, Jianjun, Shenzhen, Guangdong 518129 (CN)
(74) Representative: Körber, Martin Hans
(86) International application number: PCT/CN2022/135088
(87) International publication number: WO 2023/098673

(57) **Abstract**

This application discloses a task processing method and an apparatus. The method includes the following steps: A first node determines a first task, where the first node includes a first core network device or a first access network device, and the first task is a task related to artificial intelligence AI; and the first node sends a first message to a second node, where the first message includes identification information of a second task and/or configuration information of the second task, the second task is a subtask of the first task, and the second node is one of nodes that are determined by the first node and that are configured to execute the first task. According to the method provided in this application, task management efficiency can be effectively improved.

## Description

This application claims priority to Chinese Patent Application No. 202111447709.2, filed with the China National Intellectual Property Administration on November 30, 2022 and entitled "TASK PROCESSING METHOD AND APPARATUS", which is incorporated herein by reference in its entirety.

### TECHNICAL FIELD

This application relates to the field of communication technologies, and in particular, to a task processing method and an apparatus.

### BACKGROUND

With development of communication systems, artificial intelligence (artificial intelligence, AI) will be increasingly applied in future communication systems.

Currently, to enable a related device to execute a specific task, the related device usually executes the task by receiving program code.

However, task management efficiency still needs to be improved.

### SUMMARY

This application provides a task processing method and an apparatus, to effectively improve AI task management efficiency.

According to a first aspect, an embodiment of this application provides a task processing method. The method includes the following steps.

A first node determines a first task, where the first node includes a first core network device or a first access network device, and the first task is a task related to artificial intelligence AI; and the first node sends a first message to a second node, where the first message includes identification information of a second task and/or configuration information of the second task, the second task is a subtask of the first task, and the second node is one of nodes that are determined by the first node and that are configured to execute the first task.

In this embodiment of this application, the first core network device or the first access network device manages and controls an AI task. In this way, related management and control of the AI task is standardized, thereby effectively improving AI task management efficiency. In addition, the first core network device can interact with any RAN and/or CN, or the first access network device can interact with any RAN and/or CN, so that feasibility and efficiency of allocating a task by the first core network device or the first access network device are effectively ensured.

According to the method provided in this embodiment of this application, a related processing procedure of the AI task is standardized. Compared with a manner for managing and controlling a task by using program code, a case in which program code needs to be updated in real time is effectively avoided, thereby effectively improving AI task management efficiency.

In a possible implementation, when the first node includes the first core network device, the second node includes any one or more of a second core network device, a second access network device, or a terminal device; or when the first node includes the first access network device, the second node includes any one or more of a second access network device, a second core network device, or a terminal device.

In a possible implementation, the second access network device includes one or more of the following: a base station, a central unit (central unit, CU), a distributed unit (distributed unit, DU), a central unit-control plane (central unit-control plane, CU-CP), and a central unit-user plane (central unit-user plane, CU-UP); and the second core network device includes one or more of the following: an access and mobility management function (access and mobility management function, AMF), a session management function (session management function, SMF), a user plane function (user plane function, UPF), a network exposure function (network exposure function, NEF), a network repository function (network repository function, NRF), a policy control function (policy control function, PCF), unified data management (unified data management, UDM), an application function (application function, AF), and an authentication server function (authentication server function, AUSF).

In a possible implementation, a protocol layer for interaction between the first core network device and the second access network device is located in an Ng interface application protocol (Ng application protocol, NgAP) layer, or is located above the NgAP layer; a protocol layer for interaction between the first core network device and the second access network device is located above a stream control transmission protocol (stream control transmission protocol, SCTP) layer; or a protocol layer for interaction between the first core network device and the access and mobility management function AMF is located above representational state transfer (representational state transfer, RST) layer, and a protocol layer for interaction between the AMF and the second access network device is located in NgAP layer, or is located above the NgAP layer.

It may be understood that the RST shown in this embodiment of this application may be understood as Restful that is based on a service-based architecture (service-based architecture, SBA).

For example, when the protocol layer for interaction between the first core network device and the second access network device is located above the NgAP layer, logic of various protocol layers is clear. However, when the protocol layer for interaction between the first core network device and the second access network device is located in the NgAP layer, it can be ensured that a quantity of layers of the protocol stack remains unchanged, and therefore signaling overheads remain unchanged. Descriptions of other protocol layers are not described in detail herein.

In a possible implementation, a protocol layer for interaction between the first access network device and the second core network device is located in an Ng interface application protocol NgAP layer, or is located above the NgAP layer; or a protocol layer for interaction between the first access network device and the second core network device is located above a stream control transmission protocol SCTP layer.

In a possible implementation, the first message further includes identification information of the first task.

In a possible implementation, a type of the first task includes any one or more of the following: an inference task, a training task, a learning task, a computing task, or a sensing task.

In a possible implementation, that a first node determines a first task includes the following step: The first node determines any one or more of life cycle information of the first task, resource information of the first task, allocation information of the first task, and decomposition information of the first task.

In a possible implementation, the life cycle information of the first task includes any one or more of the following: addition of the first task, modification of the first task, querying of the first task, reporting of the first task, migration of an execution node of the first task, and migration of a management node of the first task; the resource information of the first task includes any one or more of the following: computing power of the first task, an algorithm of the first task, data of the first task, or a connection of the first task; the allocation information of the first task includes any one or more of the following: allocation of an execution node of the first task, allocation of an execution type of the execution node of the first task, and resource allocation of the execution node of the first task; and/or the decomposition information of the first task includes any one or more of the following: a quantity of tasks obtained by decomposing the first task and computing power decomposition of the first task.

In this embodiment of this application, the first core network device or the first access network device can more flexibly allocate a task by decomposing and/or allocating the first task, so that the second node can execute a task that matches a capability of the second node, thereby further improving AI task management efficiency, and further improving task execution efficiency of the second node.

In a possible implementation, that a first node determines a first task includes the following step: The first node determines at least two first tasks, where the at least two first tasks are executed by one or more second nodes.

That is, when receiving two or more tasks, the first node may alternatively not decompose the tasks, but directly allocate the tasks to corresponding second nodes.

In a possible implementation, the second task is the first task.

In a possible implementation, that a first node determines a first task includes the following step: The first node determines at least two second tasks of the first task, where the at least two second tasks correspond to at least two second nodes, and execution types of the at least two second nodes are coordinated execution, or execution types of the at least two second nodes are single-point execution.

In a possible implementation, the method further includes any one or more of the following: The first node receives capability information from the second node, where the capability information indicates a capability of the second node to execute a task; the first node sends a resource configuration request to the second node, where the resource configuration request is used to request to perform resource configuration on the second task; the first node receives a second message, where the second message indicates an execution result of the second task; or the first node receives at least two second messages, and combines execution results of the first task based on the at least two second messages, where the second message indicates an execution result of the second task.

According to a second aspect, an embodiment of this application provides a task processing method. The method includes the following steps.

A second node receives a first message from a first node, where the first message includes identification information of a second task and/or configuration information of the second task, the second task is a subtask of the first task, the second node is one of nodes that are determined by the first node and that are configured to execute the first task, the first task is a task related to artificial intelligence AI, and the first node includes a first core network device or a first access network device; and the second node executes the second task.

In a possible implementation, when the first node includes the first core network device, the second node includes any one or more of a second core network device, a second access network device, or a terminal device; or when the first node includes the first access network device, the second node includes any one or more of a second access network device, a second core network device, or a terminal device.

In a possible implementation, the second access network device includes one or more of the following: a base station, a central unit CU, a distributed unit DU, a central unit-control plane CU-CP, and a central unit-user plane CU-UP; and the second core network device includes one or more of the following: an access and mobility management function AMF, a session management function SMF, a user plane function UPF, a network exposure function NEF, a network repository function NRF, a policy control function PCF, unified data management UDM, an application function AF, and an authentication server function AUSF.

In a possible implementation, a protocol layer for interaction between the first core network device and the second access network device is located in an Ng interface application protocol NgAP layer, or is located above the NgAP layer; a protocol layer for interaction between the first core network device and the second access network device is located above a stream control transmission protocol SCTP layer; or a protocol layer for interaction between the first core network device and the access and mobility management function AMF is located above representational state transfer RST layer, and a protocol layer for interaction between the AMF and the second access network device is located in an NgAP layer, or is located above the NgAP layer.

In a possible implementation, a protocol layer for interaction between the first access network device and the second core network device is located in an Ng interface application protocol NgAP layer, or is located above the NgAP layer; or a protocol layer for interaction between the first access network device and the second core network device is located above a stream control transmission protocol SCTP layer.

In a possible implementation, the method further includes any one or more of the following: The second node sends capability information to the first node, where the capability information indicates a capability of the second node to execute a task; the second node receives a resource configuration request from the first node, where the resource configuration request is used to request to perform resource configuration on the second task; or the second node sends a second message to the first node, where the second message indicates an execution result of the second task.

It may be understood that, for related descriptions of the second aspect, refer to the method embodiment shown in the first aspect or the following.

According to a third aspect, an embodiment of this application provides a communication apparatus. The apparatus includes units configured to perform the method in any one of the first aspect or the possible implementations of the first aspect.

According to a fourth aspect, an embodiment of this application provides a communication apparatus. The apparatus includes units configured to perform the method in any one of the second aspect or the possible implementations of the second aspect.

According to a fifth aspect, an embodiment of this application provides a communication apparatus. The communication apparatus includes:
a processing unit, configured to determine a first task, where the communication apparatus includes a first core network device or a first access network device, and the first task is a task related to artificial intelligence AI; and
a transceiver unit, configured to send a first message to a second node, where the first message includes identification information of a second task and/or configuration information of the second task, the second task is a subtask of the first task, and the second node is one of nodes that are determined by the communication apparatus and that are configured to execute the first task.

It may be understood that, that the transceiver unit shown in this embodiment of this application is configured to send a first message may be further understood as the following: The processing unit is configured to control the transceiver unit to send the first message, or the processing unit is configured to send the first message by using the transceiver unit. Descriptions of the processing unit and the transceiver unit are also applicable below.

In a possible implementation, when the communication apparatus includes the first core network device, the second node includes any one or more of a second core network device, a second access network device, or a terminal device; or when the communication apparatus includes the first access network device, the second node includes any one or more of a second access network device, a second core network device, or a terminal device.

In a possible implementation, the second access network device includes one or more of the following: a base station, a central unit CU, a distributed unit DU, a central unit-control plane CU-CP, and a central unit-user plane CU-UP; and the second core network device includes one or more of the following: an access and mobility management function AMF, a session management function SMF, a user plane function UPF, a network exposure function NEF, a network repository function NRF, a policy control function PCF, unified data management UDM, an application function AF, and an authentication server function AUSF.

In a possible implementation, a protocol layer for interaction between the first core network device and the second access network device is located in an Ng interface application protocol NgAP layer, or is located above the NgAP layer; a protocol layer for interaction between the first core network device and the second access network device is located above a stream control transmission protocol SCTP layer; or a protocol layer for interaction between the first core network device and the access and mobility management function AMF is located above representational state transfer RST layer, and a protocol layer for interaction between the AMF and the second access network device is located in an NgAP layer, or is located above the NgAP layer.

In a possible implementation, a protocol layer for interaction between the first access network device and the second core network device is located in an Ng interface application protocol NgAP layer, or is located above the NgAP layer; or a protocol layer for interaction between the first access network device and the second core network device is located above a stream control transmission protocol SCTP layer.

In a possible implementation, the first message further includes identification information of the first task.

In a possible implementation, a type of the first task includes any one or more of the following: an inference task, a training task, a learning task, a computing task, or a sensing task.

In a possible implementation, the processing unit is specifically configured to determine any one or more of life cycle information of the first task, resource information of the first task, allocation information of the first task, or decomposition information of the first task.

In a possible implementation, the life cycle information of the first task includes any one or more of the following: addition of the first task, modification of the first task, querying of the first task, reporting of the first task, migration of an execution node of the first task, and migration of a management node of the first task; the resource information of the first task includes any one or more of the following: computing power of the first task, an algorithm of the first task, data of the first task, or a connection of the first task; the allocation information of the first task includes any one or more of the following: allocation of an execution node of the first task, allocation of an execution type of the execution node of the first task, and resource allocation of the execution node of the first task; and/or the decomposition information of the first task includes any one or more of the following: a quantity of tasks obtained by decomposing the first task and computing power decomposition of the first task.

In a possible implementation, the processing unit is specifically configured to determine at least two second tasks of the first task, where the at least two second tasks correspond to at least two second nodes, and execution types of the at least two second nodes are coordinated execution, or execution types of the at least two second nodes are single-point execution.

In a possible implementation, the transceiver unit is further configured to receive capability information from the second node, where the capability information indicates a capability of the second node to execute a task; the transceiver unit is further configured to send a resource configuration request to the second node, where the resource configuration request is used to request to perform resource configuration on the second task; the transceiver unit is further configured to receive a second message, where the second message indicates an execution result of the second task; or the transceiver unit is further configured to receive at least two second messages, and combine execution results of the first task based on the at least two second messages, where the second message indicates an execution result of the second task.

In this embodiment of this application, that the transceiver unit is configured to receive capability information may also be understood as the following: The processing unit controls the transceiver unit to receive the capability information, or the processing unit receives the capability information by using the transceiver unit. Descriptions of the processing unit and the transceiver unit are also applicable below.

According to a sixth aspect, an embodiment of this application provides a communication apparatus. The communication apparatus includes:
a transceiver unit, configured to receive a first message from a first node, where the first message includes identification information of a second task and/or configuration information of the second task, the second task is a subtask of the first task, the communication apparatus is one of nodes that are determined by the first node and that are configured to execute the first task, the first task is a task related to artificial intelligence AI, and the first node includes a first core network device or a first access network device; and
a processing unit, configured to execute the second task.

In a possible implementation, when the first node includes the first core network device, the communication apparatus includes any one or more of a second core network device, a second access network device, or a terminal device; or when the first node includes the first access network device, the communication apparatus includes any one or more of a second access network device, a second core network device, or a terminal device.

In a possible implementation, the second access network device includes one or more of the following: a base station, a central unit CU, a distributed unit DU, a central unit-control plane CU-CP, and a central unit-user plane CU-UP; and the second core network device includes one or more of the following: an access and mobility management function AMF, a session management function SMF, a user plane function UPF, a network exposure function NEF, a network repository function NRF, a policy control function PCF, unified data management UDM, an application function AF, and an authentication server function AUSF.

In a possible implementation, a protocol layer for interaction between the first core network device and the second access network device is located in an Ng interface application protocol NgAP layer, or is located above the NgAP layer; a protocol layer for interaction between the first core network device and the second access network device is located above a stream control transmission protocol SCTP layer; or a protocol layer for interaction between the first core network device and the access and mobility management function AMF is located above representational state transfer RST layer, and a protocol layer for interaction between the AMF and the second access network device is located in an NgAP layer, or is located above the NgAP layer.

In a possible implementation, a protocol layer for interaction between the first access network device and the second core network device is located in an Ng interface application protocol NgAP layer, or is located above the NgAP layer; or a protocol layer for interaction between the first access network device and the second core network device is located above a stream control transmission protocol SCTP layer.

In a possible implementation, the transceiver unit is further configured to send capability information to the first node, where the capability information indicates a capability of the communication apparatus to execute a task; the transceiver unit is further configured to receive a resource configuration request from the first node, where the resource configuration request is used to request to perform resource configuration on the second task; or the transceiver unit is further configured to send a second message to the first node, where the second message indicates an execution result of the second task.

It may be understood that for specific descriptions of the sixth aspect, refer to the apparatus embodiment shown in the first aspect, the second aspect, or the following.

According to a seventh aspect, an embodiment of this application provides a communication apparatus. The communication apparatus includes a processor, configured to perform the method in any one of the first aspect or the possible implementations of the first aspect. Alternatively, the processor is configured to execute a program stored in a memory. When the program is executed, the method in any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal. For example, the transceiver may be configured to send a first message and the like.

According to an eighth aspect, an embodiment of this application provides a communication apparatus. The communication apparatus includes a processor, configured to perform the method in any one of the second aspect or the possible implementations of the second aspect. Alternatively, the processor is configured to execute a program stored in a memory. When the program is executed, the method in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal. For example, the transceiver may be configured to receive a first message and the like.

According to a ninth aspect, an embodiment of this application provides a communication apparatus. The communication apparatus includes a logic circuit and an interface, the logic circuit is coupled to the interface, the logic circuit is configured to determine a first task, and the interface is configured to output a first message.

For example, the interface is configured to input a second message and the like.

It may be understood that for descriptions of the first task, the first message, and the like, refer to the descriptions of the first aspect or the second aspect, or refer to the following embodiments. Details are not described herein.

According to a tenth aspect, an embodiment of this application provides a communication apparatus. The communication apparatus includes a logic circuit and an interface, the logic circuit is coupled to the interface, the interface is configured to input a first message, and the logic circuit is configured to execute a second task.

It may be understood that for descriptions of the first message, the first task, the second task, and the like, refer to the descriptions of the first aspect or the second aspect, or refer to the following embodiments. Details are not described herein.

According to an eleventh aspect, an embodiment of this application provides a computer-readable storage medium. The computer-readable storage medium is configured to store a computer program. When the computer program runs on a computer, the method according to any one of the first aspect or the possible implementations of the first aspect is enabled to be performed.

According to a twelfth aspect, an embodiment of this application provides a computer-readable storage medium. The computer-readable storage medium is configured to store a computer program. When the computer program runs on a computer, the method according to any one of the second aspect or the possible implementations of the second aspect is enabled to be performed.

According to a thirteenth aspect, an embodiment of this application provides a computer program product. The computer program product includes a computer program or computer code. When the computer program product runs on a computer, the method according to any one of the first aspect or the possible implementations of the first aspect is enabled to be performed.

According to a fourteenth aspect, an embodiment of this application provides a computer program product. The computer program product includes a computer program or computer code. When the computer program product runs on a computer, the method according to any one of the second aspect or the possible implementations of the second aspect is enabled to be performed.

According to a fifteenth aspect, an embodiment of this application provides a computer program. When the computer program runs on a computer, the method according to any one of the first aspect or the possible implementations of the first aspect is performed.

According to a sixteenth aspect, an embodiment of this application provides a computer program. When the computer program runs on a computer, the method according to any one of the second aspect or the possible implementations of the second aspect is performed.

According to a seventeenth aspect, an embodiment of this application provides a wireless communication system. The wireless communication system includes a first node and a second node. The first node is configured to perform the method shown in any one of the first aspect or the possible implementations of the first aspect. The second node is configured to perform the method shown in any one of the second aspect or the possible implementations of the second aspect.

### BRIEF DESCRIPTION OF DRAWINGS

FIG. 1 is a schematic diagram of a network architecture according to an embodiment of this application;
FIG. 2a is a schematic diagram of protocol stacks of a control plane (control plane, CP) and a user plane (user plane, UP) according to an embodiment of this application;
FIG. 2b is a schematic diagram of deployment of base stations according to an embodiment of this application;
FIG. 2c is a schematic diagram of a protocol stack between different network elements according to an embodiment of this application;
FIG. 2d is a schematic diagram of an interface between network elements according to an embodiment of this application;
FIG. 3 is a schematic flowchart of a task processing method according to an embodiment of this application;
FIG. 4a and FIG. 4b are each a schematic diagram of deployment of a first node and a second node according to an embodiment of this application;
FIG. 5a and FIG. 5b are each a schematic diagram of a scenario of task decomposition and task allocation according to an embodiment of this application;
FIG. 6a and FIG. 6b are each a schematic diagram of a coordinated type according to an embodiment of this application;
FIG. 7a and FIG. 7b are each a schematic diagram of a network architecture according to an embodiment of this application;
FIG. 8a is a schematic diagram of different management methods of a session and a task according to an embodiment of this application;
FIG. 8b is a schematic diagram of functions of a first node and a second node according to an embodiment of this application;
FIG. 9a is a schematic diagram of interaction between different network elements according to an embodiment of this application;
FIG. 9b and FIG. 9c are each a schematic diagram of a protocol layer for interaction between different network elements according to an embodiment of this application;
FIG. 10a to FIG. 10d are each a schematic diagram of a protocol layer for interaction between different network elements according to an embodiment of this application;
FIG. 11a to FIG. 11e are each a schematic diagram of a protocol layer for interaction between different network elements according to an embodiment of this application;
FIG. 12a and FIG. 12b are each a schematic flowchart of a task processing method according to an embodiment of this application;
FIG. 13a is a schematic diagram of interaction between different network elements according to an embodiment of this application;
FIG. 13b is a schematic diagram of a protocol layer for interaction between different network elements according to an embodiment of this application;
FIG. 14a to FIG. 14f are each a schematic diagram of a protocol layer for interaction between different network elements according to an embodiment of this application;
FIG. 15 is a schematic flowchart of a task processing method according to an embodiment of this application; and
FIG. 16 to FIG. 18 are each a schematic diagram of a structure of a communication apparatus according to an embodiment of this application.

### DESCRIPTION OF EMBODIMENTS

To make the objectives, technical solutions, and advantages of this application clearer, this application is further described with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

A method provided in this application may be applied to various communication systems, for example, an internet of things (Internet of things, IoT) system, a narrowband internet of things (narrowband Internet of things, NB-IoT) system, a long term evolution (long term evolution, LTE) system, a 5th generation (5th generation, 5G) communication system, and a new communication system (for example, 6G) emerging in future communication development. In addition, the method provided in this application may be further applied to a wireless local area network (wireless local area network, WLAN) system, for example, wireless-fidelity (wireless-fidelity, Wi-Fi).

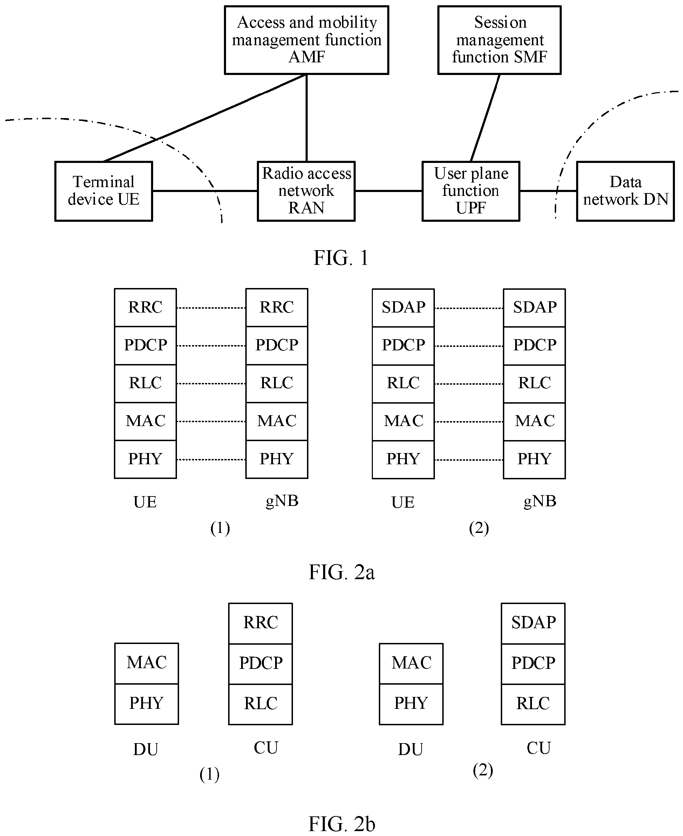

The technical solutions provided in this application may be further applied to machine type communication (machine type communication, MTC), a long-term evolution machine type communication (long-term evolution machine type communication, LTE-M) technology, a device-to-device (device-to-device, D2D) network, a machine-to-machine (machine-to-machine, M2M) network, an internet of things (internet of things, IoT) network, an industrial internet, or another network. The IoT network may include, for example, an internet of vehicles. Communication manners in an internet of vehicles system are collectively referred to as vehicle-to-everything (vehicle-to-everything, V2X, where X may represent any thing). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. For example, in FIG. 1 shown below, terminal devices may communicate with each other by using the D2D technology, the M2M technology, the V2X technology, or the like.

For example, the following describes a network architecture in this application by using a 5G communication system as an example.

FIG. 1 is a schematic diagram of a network architecture according to an embodiment of this application. The network architecture shown in FIG. 1 is, for example, a 5G network architecture that is based on a service-based architecture and that is defined in a 3rd generation partnership project (3rd generation partnership project, 3GPP) standardization process. As shown in FIG. 1, the network architecture may include at least three parts: a terminal device part, an operator network part, a data network (data network, DN) part, and the like.

For example, the data network (data network, DN) may also be referred to as a packet data network (packet data network, PDN), and is usually a network located outside an operator network, for example, a third-party network. For example, the operator network may access a plurality of data networks, and a plurality of services may be deployed in the data network, to provide a data service and/or a voice service, and the like for a terminal device. A specific representation form of the third-party network may be specifically determined based on an actual application scenario. This is not limited in this application.

For example, the terminal device part includes a terminal device, and the terminal device may also be referred to as user equipment (user equipment, UE), a terminal, a user terminal, or the like. The terminal device is a device that has a wireless transceiver function. For example, the terminal device may communicate with one or more core network (core network, CN) devices (or may be referred to as a core device) through an access network device (or may be referred to as an access device) in a radio access network (radio access network, RAN). In a possible implementation, the terminal device may be deployed on land, including indoors or outdoors, or in a handheld manner, a wearable manner, or an in-vehicle manner, or may be deployed on a water surface, for example, on a ship. In another possible implementation, the terminal device may be a handheld device, an in-vehicle device, a wearable device, a sensor, a terminal in the internet of things, a terminal in the internet of vehicles, an uncrewed aerial vehicle, a terminal device in any form in a 5th-generation (5th-generation, 5G) network or a future network, or the like that has a wireless communication function. This is not limited in this application.

It may be understood that the terminal device shown in this application may not only include a vehicle (for example, an entire vehicle) in the internet of vehicles, but also include an in-vehicle device or an in-vehicle terminal (including a telematics box (telematics box, T-box) or a host in an internet of vehicles system) in the internet of vehicles. A specific form of the terminal device applied to the internet of vehicles is not limited in this application. For ease of description, the following describes the method in this application by using an example in which the terminal device is UE.

For example, the operator network part may include an access and mobility management function (access and mobility management function, AMF), a session management function (session management function, SMF), a user plane function (user plane function, UPF), a radio access network (radio access network, RAN), and the like. In the foregoing operator network, other parts than the radio access network part may also be referred to as a core network (core network, CN) part or a core network part. The access network device may be deployed in the radio access network, to provide a wireless communication service for the terminal device. The access network device may also be referred to as an access device, a RAN device, or the like. For example, the core network may further include a network exposure function (network exposure function, NEF), a network storage function (network repository function, NRF), a policy control function (policy control function, PCF), unified data management (unified data management, UDM), an application function (application function, AF), an authentication server function (authentication server function, AUSF), and the like. It may be understood that, for other network elements in the core network, details are not described in embodiments of this application. It may be understood that, with evolution of standard technologies, the AMF, the SMF, or the UPF shown in this application may have other evolutions. For example, the AMF may be evolved into a case in which an access function and a mobility management function are separately deployed, or the AMF, the SMF, and the UPF may have other names. For this, the AMF, the SMF, and the UPF shown below should not be understood as a limitation on embodiments of this application.

For example, the access network device may be a next-generation NodeB (next generation NodeB, gNB), a next-generation evolved NodeB (next generation evolved NodeB, ngeNB), an access network device in future 6G communication, or the like. The access network device may be any device that has a wireless transceiver function, and includes but is not limited to the foregoing base stations (including a base station deployed on a satellite). The access network device may alternatively be an apparatus that has a base station function in a sixth generation communication system. Optionally, the access network device may be an access node, a wireless relay node, a wireless backhaul node, or the like in a wireless local area network (wireless-fidelity, Wi-Fi) system. Optionally, the access network device may be a radio controller in a cloud radio access network (cloud radio access network, CRAN) scenario. Optionally, the access network device may be a wearable device, an in-vehicle device, or the like. Optionally, the access network device may be a small cell, a transmission and receiving point (transmission and receiving point, TRP) (or may be referred to as a transmission point), or the like. It may be understood that the access network device may alternatively be a base station, a satellite, or the like in a future evolved public land mobile network (public land mobile network, PLMN). The access network device may alternatively be a device or the like that bears a base station function in a non-terrestrial communication system, D2D, V2X, or M2M. A specific type of the access network device is not limited in this application. In systems of different radio access technologies, names of devices that have an access network device function may be different.

FIG. 2a is a schematic diagram of protocol stacks of a control plane (control plane) and a user plane (user plane) according to an embodiment of this application. As shown in FIG. 2a, layers of a terminal device and an access network device may be connected to each other, to transfer information. (1) in FIG. 2a shows control plane protocols of a terminal device and an access network device. For example, the control plane protocol may include a physical (physical, PHY) layer, a media access control (media access control, MAC) layer, a radio link control (radio link control, RLC) layer, a packet data convergence protocol (packet data convergence protocol, PDCP), and radio resource control (radio resource control, RRC). (2) in FIG. 2a shows user plane protocols of a terminal device and an access network device. For example, the user plane protocol includes PHY, MAC, RLC, PDCP, and a service data adaptation protocol (service data adaptation protocol, SDAP).

In some deployments, as shown in FIG. 2b, a base station (for example, a gNB) may include a central unit (central unit, CU) and a distributed unit (distributed unit, DU). For example, the base station may include the CU and the DU, that is, functions of the base station in the access network are split, some functions of the base station are deployed on the CU, and remaining functions of the base station are deployed on the DU. A plurality of DUs may alternatively share one CU, to reduce costs and facilitate network expansion. As shown in (1) in FIG. 2b, a CU and a DU may be split based on a protocol stack. RRC, PDCP, and RLC are deployed on the CU, and MAC and PHY are deployed on the DU. As shown in (2) in FIG. 2b, SDAP, PDCP, and RLC are deployed on a CU, and MAC and PHY are deployed on a DU.

In some other deployments, the CU may alternatively be divided into a CU-CP and a CU-UP. The CU-CP is responsible for a control plane function, and mainly includes RRC and PDCP (for example, may also be referred to as PDCP-C) corresponding to the control plane. The PDCP-C is mainly responsible for data encryption and decryption, integrity protection, data transmission, and the like on the control plane. The CU-UP is responsible for a user plane function, and mainly includes SDAP and PDCP (for example, may also be referred to as PDCP-U) corresponding to the user plane. Different deployment manners of the base station shown in this application are merely examples. During specific implementation, the base station may alternatively be deployed in another manner. Therefore, a deployment manner of the base station shown below should not be understood as a limitation on embodiments of this application. With evolution of standard technologies, this application is also applicable when a base station has different deployment manners. The gNB shown in this embodiment of this application may alternatively be replaced with xNB, where x represents different representations of base stations in different standard networks. For example, the xNB is an eNB in a 4G network, and the xNB is a gNB in a 5G network.

It may be understood that, for ease of distinguishing between different deployment manners of the base station, the base station described below may be understood as a device, for example, a gNB or an eNB, that has a base station function and whose function is not split. Therefore, the base station, the CU, the DU, and the like shown below may be understood as different devices.

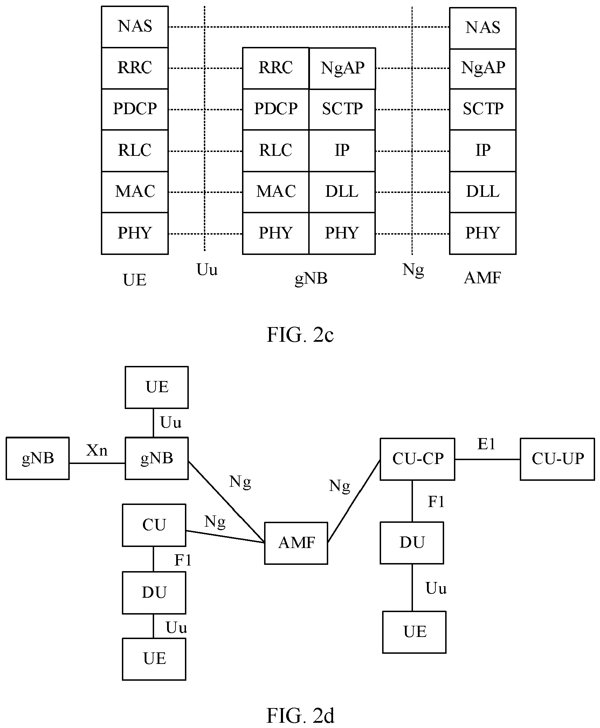

FIG. 2c is a schematic diagram of a protocol stack between different network elements according to an embodiment of this application. As shown in FIG. 2c, a protocol stack for interaction between an AMF and a gNB includes an NG interface application protocol (Ng application protocol, NgAP) (which may also be referred to as an NGAP, an Ng-AP, or the like), a stream control transmission protocol (stream control transmission protocol, SCTP), an internet protocol (internet protocol, IP), a data link layer (data link layer, DLL), and a PHY from top to bottom. As shown in FIG. 2c, when interaction is performed between the AMF and UE, the interaction may be performed by using a non-access stratum (non-access stratum, NAS). An interface between the UE and the gNB may include an air interface, for example, an LTE-Uu interface or an NR-Uu interface, and an interface between the gNB and the AMF may include an Ng interface.

FIG. 2d is a schematic diagram of an interface between network elements according to an embodiment of this application. As shown in FIG. 2d, an interface between UE and a gNB includes a Uu interface, indicating that the UE and the gNB may be connected through the Uu interface. An interface between gNBs includes an Xn interface, indicating that the gNBs may be connected through the Xn interface. An interface between the gNB and an AMF includes an Ng interface, an interface between a CU and a DU includes an F1 interface, and an interface between the DU and the UE includes a Uu interface. For another example, an interface between the AMF and a CU-CP includes an Ng interface, an interface between the CU-CP and a CU-UP includes an E1 interface, and an interface between the CU-CP and the DU includes an F1 interface. It may be understood that, for example, a protocol layer for interaction between the CU and the DU includes an F1 interface application protocol (F 1 application protocol, F1AP) (which may also be referred to as F1-AP), and a protocol layer for interaction between the CU-CP and the CU-UP includes an E1 interface application protocol (E1 application protocol, E1AP) (which may also be referred to as E1-AP).

For example, in some deployments, when the gNB is divided into a CU and a DU, the CU may represent that the gNB is connected to a core network through an Ng interface, and the CU represents that the gNB is connected to another gNB through an Xn interface. It may be understood that the foregoing types of base stations, interfaces, or protocol stacks are merely examples. During specific implementation, there may be another type of base station, another interface, another protocol stack, or the like. This is not limited in this application.

It should be noted that a protocol stack for interaction between two network elements shown in this application is shown based on a fifth generation communication system. With evolution of the communication system, the protocol stack for interaction between the network elements may change, and/or the network elements shown in this application may also change (for example, function splitting and/or combination are performed). Therefore, all protocol stacks or interfaces that have functions similar to those shown in FIG. 2a to FIG. 2d fall within the protection scope of this application.

It may be understood that the method provided in this application is applicable to both a homogeneous network scenario and a heterogeneous network scenario. In addition, there is no limitation on a transmission point, for example, transmission may be multipoint collaboration transmission between macro base stations, between micro base stations, and between a macro base station and a micro base station. For another example, the method provided in this application is applicable to both a frequency division duplexing (frequency division duplexing, FDD) system and/or a time division duplexing (time division duplexing, TDD) system. For another example, the method provided in this application is applicable to a low-frequency scenario (for example, lower than 6G, or referred to as sub 6G), or is applicable to a high-frequency scenario (for example, higher than 6G), a terahertz scenario, an optical communication scenario, or the like.

A network data analytics function (network data analytics function, NWDAF) in a 5G network may be used to support artificial intelligence (artificial intelligence, AI), mainly collects and analyzes data at an application layer, and provides a service and interface invoking for an external system. In addition, an operation and maintenance (operation and maintenance, OAM) network element in the 5G network also has a similar management data analytics function (management data analytics function, MDAF), and can support data collection and analysis of management data, and provide a service and interface invoking for an external system. However, in the foregoing AI-related research project, an AI-related procedure and functions are not standardized. This application provides a task processing method and a related product, so that AI task management efficiency can be effectively improved by standardizing an AI task.

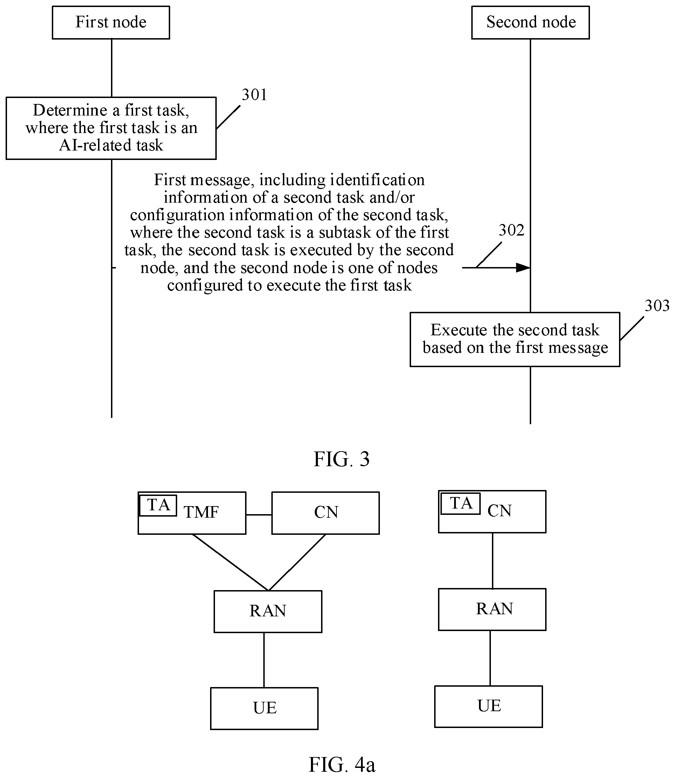

FIG. 3 is a schematic flowchart of a task processing method according to an embodiment of this application. The following describes in detail a first node and a second node in the task processing method.

Implementation 1: The first node includes a first core network device.

The first node is deployed in the first core network device, the first node is included in the first core network device, or the first node includes the first core network device, or the like. A description of a relationship between the first core network device and the first node is not limited in this embodiment of this application.

It is assumed that both a network element in a core network (which may also be briefly referred to as a CN network element) and a network element in an access network (which may also be briefly referred to as a RAN network element) may be used as a second node. In this case, both the network element in the core network and the network element in the access network may be centrally managed and/or controlled by the first core network device. For example, the first core network device may be a core network device in the operator network part shown in FIG. 1 (as shown in the figure at a right side of FIG. 4a); or the first core network device may be an added core network element (as shown in the figure at a left side of FIG. 4a). As shown in FIG. 4a, a task management function (task management function, TMF) in FIG. 4a may be understood as an added core network element, and a task anchor (task anchor, TA) shown in the TMF may be understood as that the TMF can implement a step, a function, or the like performed by the first node shown in embodiments of this application. The TA in the CN shown in FIG. 4a may be understood as that the CN can implement a step, a function, or the like performed by the first node shown in embodiments of this application.

For example, the first core network device may be one of an AMF, an SMF, or a UPF. For another example, the first core network device may alternatively be an added core network element, for example, a TMF. For another example, the first core network device may be an AMF that has a specific type of feature. For example, the first core network device may be a network element that has an access and mobility management function in a 6G network. For another example, the first core network device may be a network element that has an access and mobility management function and that can process an AI task. It may be understood that, for descriptions of the UPF, the SMF, or the TMF, refer to descriptions of the AMF. Details are not described herein. For another example, the first core network device may be a specific AMF, a specific UPF, a specific SMF, a specific TMF, or the like. It should be noted that the first core network device may further include one or more of an NEF, an NRF, a PCF, UDM, an AF and an AUSF. Details are not described herein.

It may be understood that the first core network device may also be referred to as a control core network (control core network, C-CN) or a core network task anchor (core network task anchor, CN TA). For ease of differentiation, the following uses an example in which the first core network device is represented by CN TA and the second core network device is represented by CN to describe a method, an implementation, or the like in embodiments of this application.

Correspondingly, the second node may include any one or more of the following: a second core network device, a second access network device, and UE. The second access network device includes a base station (for example, a gNB or an eNB), a CU, a DU, a CU-CP, and a CU-UP. For example, a difference between the first core network device and the second core network device lies in that the first core network device can perform a step performed by the first node, or can implement a related function that can be implemented by the first node. To be specific, the first core network device is configured to perform related management, control, or the like on a task, and the second core network device is configured to perform a specific task based on management or control of the first core network device. For example, if the first core network device is a TMF, the second core network device is an AMF, an SMF, a UPF, or the like. For another example, if the first core network device is an AMF, the second core network device may be an SMF, a UPF, or the like. For another example, when the first core network device is a specific AMF, the second core network device may be another AMF.

It should be noted that when the first node includes the first core network device, both the first access network device and the second access network device shown in this embodiment of this application may be centrally managed and controlled by the first core network device. Alternatively, it may be understood as that when the first node includes the first core network device, the first access network device and the second access network device may not be specifically distinguished in this embodiment of this application.

Implementation 2: The first node includes a first access network device.

The first node is deployed in the first access network device, the first node is included in the first access network device, or the first node includes the first access network device, or the like. A description of a relationship between the first access network device and the first node is not limited in this embodiment of this application.

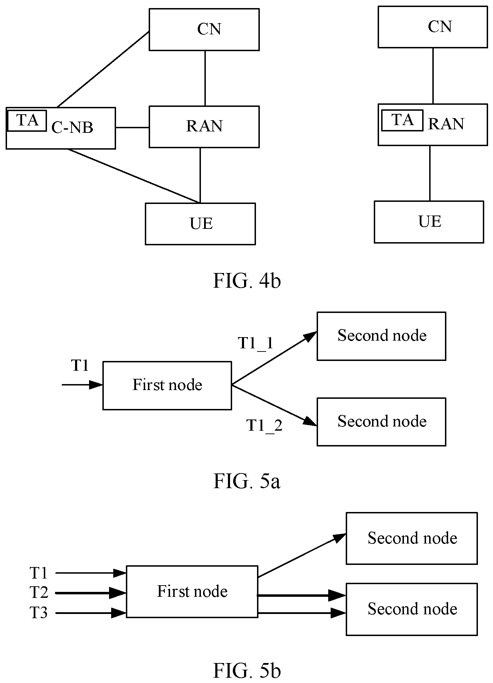

It is assumed that both a CN network element and a RAN network element may be used as a second node. In this case, a CN computing power node, a RAN computing power node, and the like may all be centrally managed and/or controlled by the first access network device. For example, the first access network device may be the access network device in the operator network part shown in FIG. 1 (as shown in the figure at a right side of FIG. 4b); or the first access network device may be an added access network element (as shown in the figure at a left side of FIG. 4b). As shown in FIG. 4b, a control NodeB (control NodeB, C-NB) in FIG. 4b may be understood as an added access network element. A task anchor (task anchor, TA) shown in the C-NB may be understood as that the C-NB can implement a step, a function, or the like performed by the first node shown in embodiments of this application. A TA in a RAN shown in FIG. 4a may be understood as that the RAN can implement a step, a function, or the like performed by the first node shown in embodiments of this application.

For example, the first access network device may be one of a gNB (only an example), a CU, a DU, a CU-UP, or a CU-CP. For another example, the first access network device may be a network element that has a base station function and that has a feature of a specific type. For example, the first access network device may be a network element that can process an AI task and that has a base station function. For another example, the first access network device may be a specific base station, a specific CU, a specific CU-CP, or the like. It may be understood that the first access network device may also be referred to as a radio access network task anchor (radio access network task anchor, RAN TA). For ease of differentiation, the following uses an example in which the first access network device is represented by RAN TA and the second access network device is represented by RAN to describe a method, an implementation, or the like in embodiments of this application.

Correspondingly, the second node may include any one or more of the following: a second core network device, a second access network device, and UE. The second access network device includes a base station (for example, a gNB), a CU, a DU, a CU-CP, and a CU-UP. It may be understood that the examples of the second access network device shown herein may not include the first access network device, to be specific, the second access network device may be another access network device other than the first access network device. The second core network device may include any one or more of an AMF, an SMF, and a UPF. It may be understood that, for related descriptions of the first access network device and the second access network device, refer to the descriptions of the first core network device and the second core network device. Details are not described herein. It may be understood that, for example, when the first access network device is a CU, the second node cannot be a CU but may be a DU, a CU-CP, a CU-UP, or the like. For another example, when the first access network device is a CU of a specific type, the second node may not be a CU of this specific type. For another example, when the first access network device is a gNB, the second access network device may be an eNB or the like. Examples are not described herein one by one.

It should be noted that when the first node includes the first access network device, both the first core network device and the second core network device shown in this embodiment of this application may be centrally managed and controlled by the first core network device. Alternatively, it may be understood as that when the first node includes the first access network device, the first core network device and the second core network device may not be specifically distinguished in this embodiment of this application.

To further understand the first node and the second node shown in embodiments of this application, for example, the first node and the second node may be understood as follows: The first node may be configured to manage and control a task (for example, manage and control a life cycle of a task, manage and control a resource of a task, decompose a task, or allocate a task), and the second node may be configured to execute a task. For example, the first node may be configured to manage and control a task resource and the like of the second node, to perform life cycle management and control on each task. For example, the second node may be configured to execute an inference task, an AI training task, or the like, to obtain an execution result. It may be understood that, for steps or functions that can be implemented by the first node and the second node, further refer to a method shown in the following.

Based on the first node and the second node shown above, as shown in FIG. 3, a task processing method provided in this embodiment of this application includes the following steps:

301: A first node determines a first task, where the first task is an AI-related task.

The first task is an AI-related task. In other words, the first node and the second node shown in this embodiment of this application may be configured to process the AI-related task. For example, a scope of AI may include any one or more of the following: language learning and processing, knowledge representation, intelligent search, inference, planning, machine learning, knowledge acquisition, combination scheduling, sensing, pattern recognition, a logical program design, soft computing, inexact and uncertain management, an artificial life, a neural network, a complex system, a genetic algorithm, a human thinking manner, and the like. For example, a type of the first task shown in this embodiment of this application may include any one or more of the following: an inference task, a training task, a learning task, a computing task, or a sensing task. It may be understood that for descriptions of the first node, the first core network device, and the first access network device, refer to the foregoing descriptions of FIG. 4a and FIG. 4b. Details are not described herein.

For specific descriptions of determining the first task by the first node, there are the following three different descriptions in this embodiment of this application.

In a first possible implementation, that a first node determines a first task includes any one or more of the following: The first node determines life cycle information of the first task, the first node determines resource information of the first task, the first node determines allocation information of the first task, or the first node determines decomposition information of the first task. That is, the first node determines any one or more of life cycle information, resource information, allocation information, or decomposition information of the first task.

For example, the life cycle information of the first task includes any one or more of the following: addition of the first task, modification of the first task, querying of the first task, reporting of the first task, migration of an execution node of the first task, and migration of a management node of the first task. For example, the addition of the first task may be understood as adding a configuration parameter of the first task or the like, for example, adding a configuration parameter of a computing task, an inference task, a sensing task, or the like. The modification of the first task may be understood as modification of a configuration parameter of an existing first task, for example, modifying a configuration parameter of an existing computing task, inference task, sensing task, or the like. The querying of the first task may be understood as querying a status, a progress, or the like of the first task, for example, querying a status or progress of an existing computing task, inference task, or sensing task. The reporting of the first task may be understood as reporting an execution result of the first task. For example, the first node may report the execution result of the first task to a trigger node. The migration of the execution node of the first task may be understood as migrating a node that executes the first task to the second node. The migration of the management node of the first task may be understood as migration of the first node. For example, when the first access network device performs cell handover, the management node of the first task may be handed over from a source base station to a target base station. It should be noted that a life cycle of the first task may further include deletion of the first task, and details are not described herein.

For example, that the first node determines resource information of the first task may also be understood as that the first node determines a resource configuration of the first task, or the first node manages a resource of the first task. The resource information of the first task includes any one or more of the following: computing power of the first task, an algorithm of the first task, data of the first task, or a connection for the first task. Usually, the computing power is a computing capability, and the computing power of the first task may be a value of computing power required for executing the first task. The algorithm is an algorithm model, for example, a single-point AI model, a joint AI model, model reconfiguration, segmentation point reconfiguration of an AI model, or AI model compression, that needs to be used when the first task is executed. The data of the first task may include a data security configuration of the first task, a data compression manner configuration of the first task, a data collection manner configuration of the first task, and the like. The connection of the first task may include establishment of a dedicated bearer of the first task, a dedicated protocol stack of the first task, a quality of service (quality of service, QoS) mechanism of the first task, and the like.

For example, the allocation information of the first task includes any one or more of the following: allocation of an execution node of the first task, allocation of an execution type of the execution node of the first task, and resource allocation of the execution node of the first task. The decomposition information of the first task includes any one or more of the following: a quantity of tasks obtained by decomposing the first task, computing power decomposition of the first task, and the like. A difference between allocation of the first task and decomposition of the first task lies in that the allocation of the first task is mainly allocation of a related resource of the first task, for example, allocation of the execution node of the first task, allocation of the execution type of the execution node of the first task, and allocation of a resource of the execution node of the first task. The decomposition of the first task is mainly decomposition of the first task itself, or decomposition of computing power of the first task. For example, the decomposition of the first task may include a quantity of tasks obtained by decomposing the first task and/or decomposition of the computing power of the first task. As shown in FIG. 5a, identification information of the first task is T1. The first node decomposes the first task into T1_1 and T1_2, and the first node allocates T1_1 to an upper second node shown in FIG. 5a, and allocates T1_2 to a lower second node (namely, the execution node) shown in FIG. 5a. Still as shown in FIG. 5b, the first node obtains three first tasks, and identification information is respectively T1, T2, and T3. The first node allocates T1 to an upper second node shown in FIG. 5b, and allocates T2 and T3 to a lower second node (namely, the execution node) shown in FIG. 5b. It may be understood that the allocation of the first task in this embodiment of this application may also be understood as mapping of the first task, for example, mapping the first task to the second node, or mapping a subtask of the first task to a plurality of second nodes, or the like. One or more second tasks are obtained by decomposing the first task, to enable a plurality of second nodes to compute the second tasks in parallel, so that all computing work of the first task can be completed in short time. This can effectively use an advantage of distributed parallel computation, and shorten completion time of an entire task.

In a second possible implementation, that a first node determines a first task includes the following step: The first node determines at least two second tasks of the first task, where the at least two second tasks correspond to at least two second nodes, and execution types of the at least two second nodes are coordinated execution, or execution types of the at least two second nodes are single-point execution.

For example, a quantity of second tasks is the same as a quantity of second nodes. For another example, a quantity of second tasks is greater than a quantity of second nodes. In other words, one second task or a plurality of second tasks may be allocated to one second node.

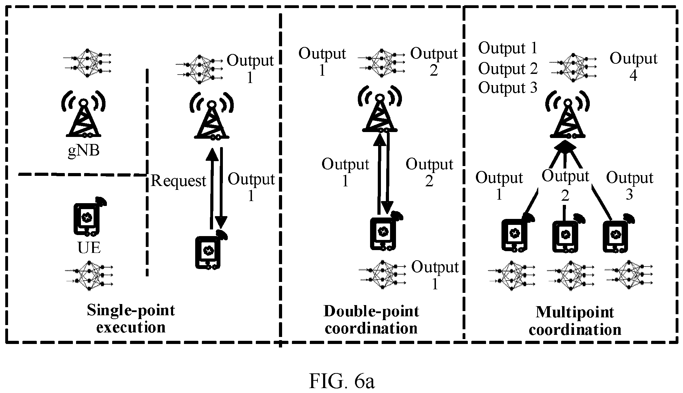

For example, the single-point execution may also be referred to as single-side execution. For example, the second node independently executes the second task. From a perspective of a task, it may also be understood as that the second task is a single-side task. For example, the first node decomposes the first task into one or more second tasks, the one or more second tasks are respectively executed by corresponding second nodes, and each of the second nodes independently executes the second task. For example, a single-side task may be independently executed on a UE side, or may be independently executed on a gNB, a CU, a DU, a CU-CP, a CU-UP, or the like. An execution type of an adaptive modulation and coding (adaptive modulation and coding, AMC) algorithm shown in FIG. 6a may be single-point execution. If execution of the AMC algorithm is triggered by UE, and then the execution is performed by a gNB, an obtained execution result is shown in an output 1 in FIG. 6a (which may also be understood as that the UE is a task anchor, and the gNB is a task execution point). It may be understood that a network shown in FIG. 6a may be understood as a neural network that includes two input layers, four hidden layers, and three output layers. It may be understood that the descriptions of the network shown in FIG. 6a are also applicable to another accompanying drawing shown in embodiments of this application.

For example, the coordinated execution may be understood as that the second task needs to be executed by two or more second nodes in a coordinated manner. From a perspective of a task, it may also be understood as that the second task is a coordinated multipoint task (where the first task may also be referred to as a coordinated task). The coordinated execution includes coordinated two-point execution, coordinated three-point execution, and the like, which are not listed one by one herein. For example, a task that needs to be coordinately executed by a plurality of second nodes may include any one or more of coordinated computing (which may also be referred to as collaboration computing), coordinated inference, coordinated training, or coordinated sensing. The coordinated two-point in FIG. 6a may include a non-uniform constellation diagram, for example, modulation and demodulation, which is performed by the gNB and the UE in coordination. For example, the UE sends the output 1 to the gNB after obtaining the output 1, and then the gNB obtains an output 2 based on the output 1. Optionally, the gNB may or may not send the output 2 to the UE after obtaining the output 2. For another example, multipoint coordination may include multiple-input multiple-output (multiple-input multiple-output, MIMO) and coordinated multipoint transmission (coordinated multipoint transmission/reception, CoMP). The multipoint coordination shown in FIG. 6a is shown by using MIMO as an example. When the multipoint coordination is CoMP, the multipoint coordination may be performed by a plurality of gNBs, and then outputs of the plurality of gNBs are sent to the UE. It may be understood that a quantity of gNBs and a quantity of UEs shown in FIG. 6a are not limited in this embodiment of this application. The MIMO, CoMP, or non-uniform constellation diagram shown above may be understood as using AI to resolve a network problem, to be specific, using AI for network optimization (AI for network optimization, AI4NET).

For a network for AI (network for AI, NET4AI) (to be specific, an AI task is processed by using a network) scenario, where for example, a 5G network is used as an example, for different RAN architectures (for example, a gNB, a CU-DU separation architecture, and a CU-CP and CU-UP separation architecture), the second node may include any one or more of UE, a gNB, a CU, a DU, a CU-CP, or a CU-UP. Therefore, according to different execution types of the second node, a plurality of types of the following manners may exist:

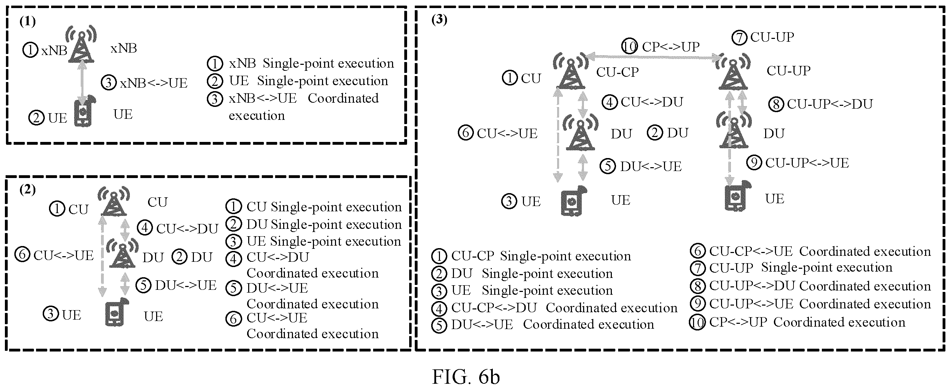

1. Both the UE and the gNB may perform single-point execution. Alternatively, as shown in (1) in FIG. 6b, a coordinated type between the UE and the gNB is two-point coordination (that is, the UE and the gNB coordinate to perform the second task).

2. The CU, the DU, and the UE separately execute the second task in a single-point manner. Alternatively, as shown in (2) in FIG. 6b, the UE and the CU coordinate to execute the second task, the UE and the DU coordinate to execute the second task, or the CU and the DU coordinate to execute the second task.

3. The CU, the DU, the UE, the CU-CP, the CU-UP and the gNB separately perform the second task in a single-point manner. Alternatively, as shown in (3) in FIG. 6b, the CU-CP and the DU coordinate to execute the second task, the DU and the UE coordinate to execute the second task, the CU-CP and the UE coordinate to execute the second task, the CU-UP and the DU coordinate to execute the second task, the CU-UP and the UD coordinate to execute the second task, and the CU-CP and the CU-UP coordinate to execute the second task.

It may be understood that the foregoing coordinated execution is shown by using coordinated two-point execution as an example, and descriptions of coordinated three-point execution or coordinated four-point execution are not listed one by one herein. The coordinated execution shown in embodiments of this application may also be understood as joint execution, collaborative execution, or the like. This is not limited in embodiments of this application.

It should be noted that network elements in a core network may also coordinately execute the second task, or network elements in a core network and network elements in an access network may also coordinately execute the second task. Examples are not described one by one herein.

In a third possible implementation, that a first node determines a first task includes the following steps: The first node receives a trigger message from a trigger node, where the trigger message is used to trigger the first node to process the first task; and the first node determines the first task based on the trigger message. For example, the trigger message may include indication information of a task allocated to the first node. The indication information may enable the first node to learn of a task (for example, including the first task) allocated by the trigger node to the first node. It may be understood that the trigger node may trigger one or more first tasks. A quantity of first tasks is not limited in this embodiment of this application. For example, the trigger node includes a network artificial intelligence management and orchestration (network AI management and orchestration, NAMO) network element (which may also be referred to as a NAMO device, a NAMO device, or the like) or an operation and maintenance (operation and maintenance, OAM) network element. For another example, the trigger node includes any one or more of UE, a gNB, a CU, a DU, a CU-CP, a CU-UP, a RAN TA, an AMF, a UPF, an SMF, or a CN TA. Certainly, alternatively, the first node may independently determine that the first task needs to be processed. For another example, for the NET4AI scenario, the trigger node may be a third-party application, to meet a third-party requirement by using a task resource or the like in a network. Optionally, the first node may send capability information of the first node to the trigger node, where the capability information of the first node indicates a capability of the first node to process an AI task. For example, the capability information of the first node may be a capability of the first node, or may be a sum of capabilities of the first node and an execution node managed and controlled by the first node. It may be understood that the capabilities shown herein may include resource capabilities related to an AI task, for example, a computing capability and an algorithm capability, which are not listed one by one herein. Optionally, the capability information of the first node may include a capability of each execution node managed by the first node, or may include a sum of capabilities of execution nodes. This is not limited in embodiments of this application.

302: The first node sends a first message, where the first message includes identification information of a second task and/or configuration information of the second task, the second task is a subtask of the first task, the second task is executed by the second node, and the second node is one of nodes that are determined by the first node and that are configured to execute the first task. Correspondingly, the second node receives the first message.

The first node may decompose the first task to obtain at least one second task, and then allocate the at least one second task to at least one second node. In other words, the first node may both decompose the first task and allocate at least one second task obtained through decomposition to an execution node. For example, the first node may decompose the first task based on any one or more of computing power, an algorithm, data, or a connection. Optionally, when the first node decomposes the first task to obtain one second task, it indicates that the second task is the first task. In other words, the first node may alternatively not decompose the first task, for example, directly allocate the first task to the second node. Optionally, the first node may further separately allocate at least two first tasks to one second node or at least two second nodes. That is, when receiving two or more tasks, the first node may alternatively not decompose the tasks, but directly allocate the tasks to corresponding second nodes. Optionally, the first node may decompose the first task to obtain two or more second tasks. The first message includes the identification information of the second task, so that the second node can learn which task is to be executed by the second node. Optionally, the first message may further include identification information of the first task, and the identification information of the first task is included, so that the second node can learn that the second task is obtained by decomposing the first task. The first message includes the configuration information of the second task, so that the second node can execute the second task based on the configuration information of the second task. For example, the configuration information of the second task may include any one or more of the following: configuration of any one or more of computing power, an algorithm, data, or a connection of the second task; allocation of an execution node; resource allocation of the execution node; a decomposition status of the first task; or the like. It may be understood that the execution node of the second task shown herein is the second node. Optionally, the first message may include a task allocation status of a corresponding second node, or include a task allocation status of each second node. In other words, the first node may send the first message in a multicast (or broadcast) manner, or may send the first message in a unicast manner.

In a possible implementation, the first node may send the first message to the second node. Correspondingly, the second node receives the first message.

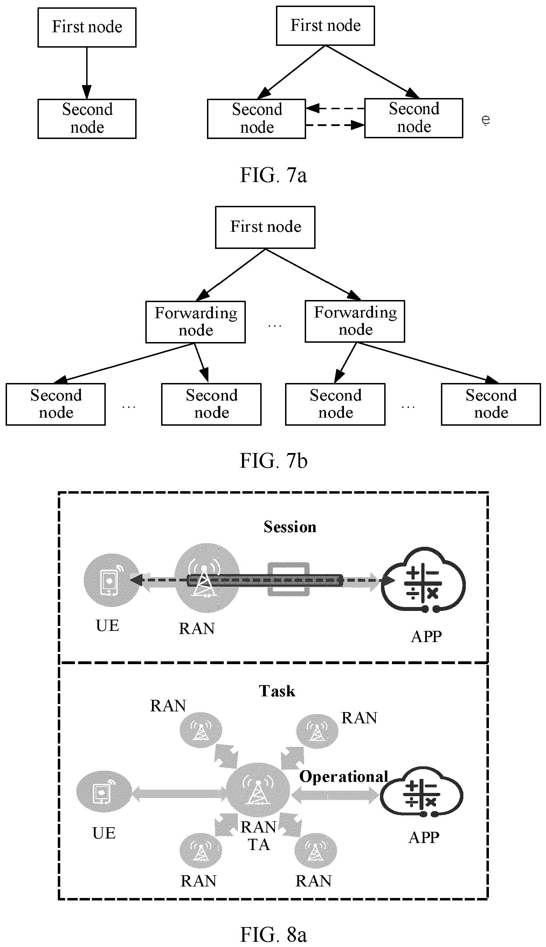

As shown in FIG. 7a, a first node may directly send a first message to a second node. For example, if the first node itself does not have strong computing power, the first node may not participate in task execution, but is responsible for further decomposing the task to an execution node (namely, a second node) managed by the first node. For another example, the second node cannot decompose and/or allocate the task. For another example, the second node cannot perform secondary decomposition and/or secondary allocation on the task. The secondary decomposition and/or secondary allocation shown herein is described relative to a forwarding node shown below. For example, UE may be understood as an execution node that has an execution function.

For a figure at a left side of FIG. 7a, the first node obtains one second task through decomposition, and the first node directly sends the first message to one second node. For a figure at a right side of FIG. 7a, the first node obtains a plurality of second tasks through decomposition (where the second node is omitted and represented by an ellipsis in FIG. 7a), and the first node may separately send the first message to each of the plurality of second nodes. For example, each first message may include identification information of a second task allocated to a corresponding second node and/or configuration information of the second task. For example, the configuration information of the second task may include any one or more of computing power, an algorithm, data, or a connection allocated to a corresponding second node. It may be understood that, for specific descriptions of the identification information and the configuration information, refer to the foregoing description. Details are not described herein. A dashed line between second nodes shown in FIG. 7a may be understood as that an execution type between at least two second nodes is coordinated execution.

In another possible implementation, the first node may send the first message to the second node by using the forwarding node. Correspondingly, the second node receives the first message.

In this embodiment of this application, when the first node needs to configure a task for the second node, but the first node cannot directly communicate with the second node, the first node may interact with the second node by using a forwarding node (for example, through transparent forwarding). It may be understood that the first node and the second node may interact with each other through one or more forwarding nodes. The forwarding node may be a core network device, an access network device, UE, or the like. This is not limited in this embodiment of this application.

As shown in FIG. 7b, a first node may send a first message to one or more second nodes by using one or more forwarding nodes. If a network architecture shown in FIG. 7a is understood as a two-level network architecture, and a network architecture shown in FIG. 7b is understood as a three-level network architecture, the network architecture shown in embodiments of this application may alternatively be of four levels, five levels, or the like. In other words, the network architecture shown in embodiments of this application is of N levels, where N is an integer greater than or equal to 2, for example, N = 2, N = 3, N = 4, or N = 5.

It should be noted that the first node is a CN TA, and the second node may also be a CN TA (a CN TA different from the first node). For another example, the first node is a RAN TA, and the second node may also be a RAN TA (a RAN TA different from the first node).

It should be noted that, the first node may determine, based on some constraint conditions, the second node that executes the first task. For example, the first node may determine the second node based on conditions such as a network element type and/or an area.

303: The second node executes the second task based on the first message.

For example, the second node may execute the second task based on the configuration information of the second task. If the configuration information of the second task includes computing power of the second task, the second node may execute the second task based on a value of the computing power of the second task. For another example, if the configuration information of the second task includes an algorithm of the second task, the second node may execute the second task based on the algorithm of the second task. Details are not listed one by one herein.

In a possible implementation, the method shown in FIG. 3 may further include the following:
The second node sends capability information to the first node. Correspondingly, the first node receives the capability information from the second node, where the capability information indicates a capability of the second node to execute a task. That a first node determines a first task includes the following: The first node determines the first task based on the capability information. In this embodiment of this application, capability negotiation may be performed between the first node and the second node, that is, the first node may allocate the second task based on the capability of the second node, thereby improving efficiency of allocating the second task by the first node.

In a possible implementation, the method shown in FIG. 3 may further include the following:
The first node sends a resource configuration request to the second node, where the resource configuration request is used to request to configure a resource for the second node. Correspondingly, after receiving the resource configuration request, the second node may accept the resource configuration request, or may reject the resource configuration request. For example, after the first node determines a life cycle of the first task, the first node may send the resource configuration request to the second node, where the resource configuration request is used to configure computing power, an algorithm, data, a connection, or the like for the second node.

In a possible implementation, the method shown in FIG. 3 may further include the following:
The second node sends a second message to the first node, where the second message indicates an execution result of the second task. Correspondingly, the first node receives the second message. For example, the execution result may include any one or more of an inference result, a computation result, a sensing result, a training result, or a learning result. Optionally, the second message may be an execution result of executing the second task by one second node. Optionally, the second message may be execution results of respectively executing the second task by a plurality of second nodes. To be specific, the execution results of the second task may be reported to the first node by second nodes respectively corresponding to the execution results, or may be reported to the first node by a specified second node. The specified second node may be specified by the first node, specified by the trigger node, specified in a protocol, or the like. This is not limited in this embodiment of this application. Alternatively, the execution results of the second task may be reported to another specified node, and the another specified node may apply the execution results, or may collectively report the execution results to the first node. It should be noted that, the second node may alternatively not send the second message to the first node. For example, the second node may locally apply the execution result.

In a possible implementation, the method shown in FIG. 3 may further include the following:
The first node receives at least two second messages, and combines execution results of the first task based on the at least two second messages, where the second message indicates the execution result of the second task. In this embodiment of this application, the first node may combine the execution results corresponding to all the second nodes, to obtain the execution result of the first task. It may be understood that combination of execution results of the first task shown in this embodiment of this application corresponds to decomposition of the first task.

It should be noted that the first node may alternatively not decompose or allocate the first task. For example, the first node also has a computing function. If a computing capability of the first node can ensure that the task is completed within a specified QoS requirement, the first node may perform computing by itself, and does not need to deliver a task (for example, the first task) to the second node for execution. It should be noted that both the first node and the second node shown in this embodiment of this application may be nodes configured to implement a step or a function of a task anchor. For example, both the first node and the second node may be CN TAs or RAN TAs. Alternatively, the first node is a CN TA, and the second node is a RAN TA; or the first node is a RAN TA, and the second node is a CN TA.

It may be understood that the method shown in FIG. 3 may include one or more of the foregoing implementations, and any combination thereof falls within the protection scope of embodiments of this application.

As shown in FIG. 8a, a 5G network communication system includes session management (session management), and life cycle management is performed on an end-to-end (end-to-end, E2E) tunnel (tunnel) established around a UE communication target. This corresponds to connection resource management. However, in this embodiment of this application, more resources (such as computing power, an algorithm, data, and a connection) are added in AI use, and an objective is also changed from user session management to AI task management. Therefore, a RAN TA or a CN TA in this embodiment of this application is used to perform corresponding life cycle management on a task. An APP shown in FIG. 8a may be understood as a third-party application, and the third-party application may provide a service for a user.

To further describe a difference between a task anchor (for example, the RAN TA or the CN TA) and a task execution point (for example, a RAN and/or a CN) in embodiments of this application, the following provides descriptions from a perspective of functions.

In this embodiment of this application, the RAN TA or the CN TA may manage a related resource (for example, computing power, an algorithm, data, a connection, sensing, and scheduling) at a granularity of a computing task, an AI task, a sensing task, or the like, to implement life cycle management and control (for example, by using management signaling and/or control signaling) on a related task. In addition, an AI for network optimization (AI for network optimization, AI4NET) function may be further implemented, and/or a network for AI (network for AI, NET4AI) function may be further implemented; and the function is opened to the outside.

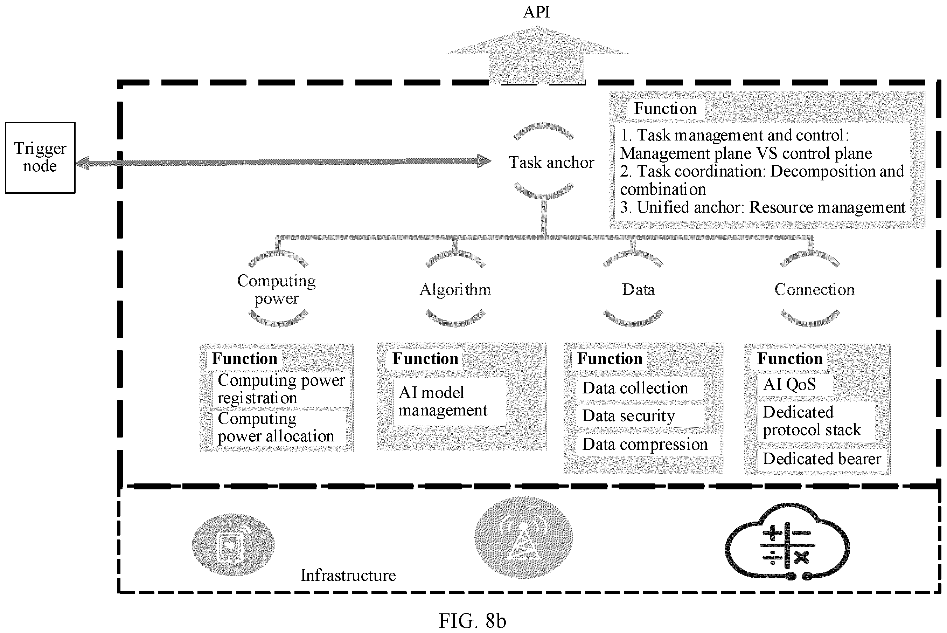

For example, as shown in FIG. 8b, a RAN TA or a CN TA may implement any one or more of the following functions:
1. Task decomposition and combination; 2. Selection of a participating node of a task (for example, a specified node or random selection), task allocation (which may also be referred to as task mapping), and configuration information of an allocated task; 3. Task life cycle management, including addition of a configuration parameter of a computing task, an AI task, or a sensing task, modification of a configuration parameter of an existing computing task, AI task, or sensing task, deletion of an existing computing task, AI task, or sensing task, querying of a status or a progress of an existing computing task, AI task, or sensing task, reporting of a result of an existing computing task, AI task, or sensing task, task anchor migration and a corresponding procedure, and execution node migration and a corresponding procedure; and 4. Task resource management, including the following: obtaining a latest resource status (for example, computing power, an algorithm, data, a connection, and sensing) of each execution node, scheduling and monitoring, at a granularity of a specific task, a resource, for example, computing power, an algorithm, data, or a connection related to the task, to ensure smooth execution of the task, controlling and managing a resource of a node that has a computing capability, and centrally managing and controlling a sensing resource. For example, managing a task-related resource at a granularity of a task includes the following: managing a computing power resource, including: computing power capability negotiation, computing power registration or reporting, computing power requesting, and the like; managing an algorithm resource, including: algorithm capability negotiation and AI model management (single-point AI model configuration, joint AI model configuration, model reconfiguration, AI model segmentation point reconfiguration, and AI model compression); managing a data resource, including: data capability negotiation, data collection, data security configuration, data compression manner configuration, and the like; and managing a connection resource, including: establishment of a dedicated bearer for a task, a dedicated protocol stack for a task, and QoS mechanism definition for a task. It may be understood that for a relationship between a trigger node and a task anchor in FIG. 8b, refer to the foregoing description. Details are not described herein. Optionally, the RAN TA or the CN TA (that is, the task anchor is used as an example in FIG. 8b) may further include an application programming interface (application programming interface, API). The API may be used for opening to the outside, so that the RAN TA or the CN TA may provide a service for a third party. Optionally, the RAN TA or the CN TA may further include an interface for interacting with a NAMO and/or an OAM, a resource management interface, and the like. The RAN TA or the CN TA further includes an interface for interacting with a RAN and/or a CN. Optionally, the RAN TA may further include an interface for interacting with another RAN TA. Optionally, the CN TA may further include an interface for interacting with another CN TA.

For example, the RAN and/or the CN may implement any one or more of the following functions:
1. Resource capability reporting, status reporting (for example, reporting of a latest status of computing power, load, memory, power, and the like), and exception information reporting; 2. Task resource managing and controlling, for example, accepting/rejecting a resource request of the task anchor (for example, task life cycle management); and 3. Task execution, execution result reporting, and the like. The RAN and/or the CN may include an interface for interacting with the RAN TA or the CN TA. Optionally, the RAN and/or the CN may further include an interface for interacting with another coordinating node, and the like.

In this embodiment of this application, the first core network device or the first access network device manages and controls an AI task. In this way, related management and control of the AI task is standardized, thereby effectively improving AI task management efficiency. In addition, the first core network device or the first access network device may more flexibly allocate a task by decomposing and/or allocating the first task, so that the second node can execute a task that matches a capability of the second node. This further improves AI task management efficiency, and further improves task execution efficiency of the second node. In addition, the first core network device can interact with any RAN and/or CN, or the first access network device can interact with any RAN and/or CN, so that feasibility and efficiency of allocating a task by the first core network device or the first access network device are effectively ensured.

According to the method provided in this embodiment of this application, a related processing procedure of the AI task is standardized. Compared with a manner for managing and controlling a task by using program code, a case in which program code needs to be updated in real time is effectively avoided, thereby effectively improving AI task management efficiency.

The following describes the task processing method provided in this embodiment of this application by using an example in which the first node includes a CN TA. For example, the CN TA may implement the method shown in FIG. 3. For example, the first node may manage and control the second node in a manner (including a manner of function definition) of control signaling (for example, through a control plane or through a user plane) to transfer a message. The message is transferred in the manner of control signaling, to achieve an objective of task allocation or task management and controlling. In this implementation, not only real-time performance (for example, at a millisecond-level) is high, but also an entire operator network can be covered. The foregoing manner of function definition may be understood as the following: defining enabling and disabling of various types of computing power, defining enabling and disabling of various algorithms, defining enabling and disabling of various data, defining enabling and disabling of various connections, or the like.

The following describes in detail an interface and a protocol stack between different network elements in embodiments of this application.

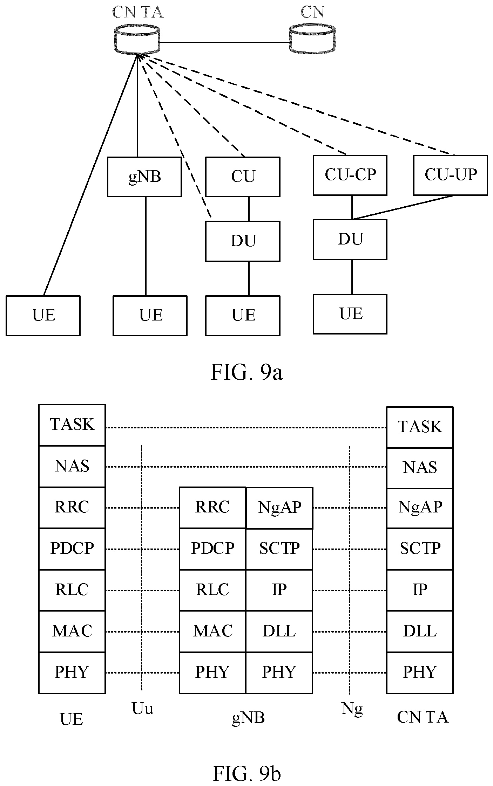

FIG. 9a is a schematic diagram of interaction between different network elements according to an embodiment of this application. Therefore, the following uses FIG. 9a as an example to describe an interface and a protocol layer between a CN TA and another network element. In the following, Case 1 shows an interface and a protocol layer that are used when a CN TA interacts with UE. Case 2 shows an interface and a protocol layer for interaction between the CN TA and a RAN (for example, including a gNB, a CU, a DU, a CU-CP, and a CU-UP). A function (TASK) layer in a protocol stack shown below represents a protocol layer that can process an AI-related task and that is improved in this embodiment of this application. In addition, a name of the TASK shown below is merely an example, and the name is not limited in this embodiment of this application. It may be understood that a solid line part shown in FIG. 9a indicates that there may be a corresponding interface between two network elements, as shown in FIG. 2d; and a dashed line part shown in FIG. 9a indicates that there may be no corresponding interface between two network elements.

### Case 1

Optionally, as shown in FIG. 9b, a protocol layer (TASK shown in FIG. 9b) for interaction between a CN TA and UE is located above NAS. To be specific, to transmit task-related signaling (including a first message) between the CN TA and the UE, in this embodiment of this application, a TASK protocol layer is added in a protocol stack of the UE, and a TASK protocol layer is added in a protocol stack of the CN TA. The TASK protocol layer independently runs above the NAS.

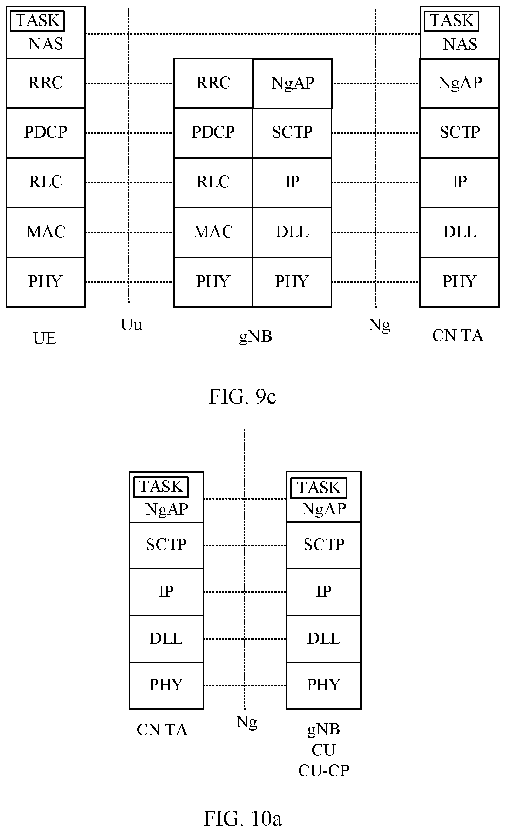

Optionally, as shown in FIG. 9c, a protocol layer for interaction between a CN TA and UE is located in NAS. To be specific, the CN TA may send a first message through NAS signaling. The NAS signaling can bear a message (for example, including the first message) related to an AI task. That is, a function of the NAS is enhanced so that the NAS can be used to transmit signaling related to the AI task. Therefore, related signaling (for example, task allocation signaling or task management signaling) is transmitted between the CN TA and the UE by using a NAS protocol layer. When signaling is transmitted by using the NAS protocol layer, the signaling is transparent and invisible to an access network device. For example, during downlink transmission, the access network device transparently transmits related signaling to the UE. For another example, during uplink transmission, the access network device transparently transmits related signaling to the CN TA. It may be understood that when the first node is a CN TA (that is, the first core network device), steps or functions implemented by the first access network device and the second access network device are the same for the CN TA. Therefore, whether the access network device shown herein is the first access network device or the second access network device is not specifically distinguished.

It may be understood that the TASK protocol layer shown in FIG. 9b may independently run above the NSA. Therefore, logic of various protocol layers is clear. In FIG. 9c, the function of the NAS is enhanced to ensure that a quantity of layers of the protocol stack remains unchanged. Therefore, signaling overheads remain unchanged. This description is also applicable to the following.

### Case 2

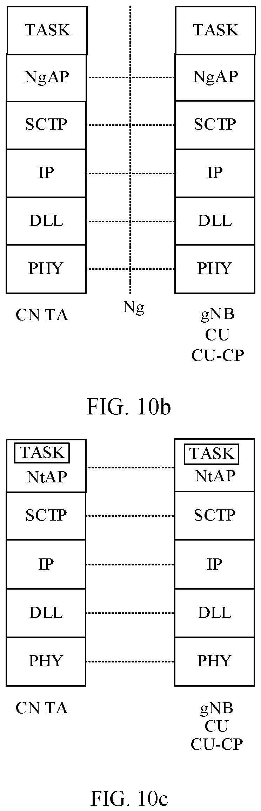

Optionally, as shown in FIG. 10a, a protocol layer for interaction between a CN TA and a RAN is located in NgAP layer. For example, the CN TA may be an AMF or a network element that has a similar protocol stack. The RAN includes any one or more of a gNB, a CU, or a CU-CP. Alternatively, the RAN may be another network element that has a protocol stack similar to that shown in FIG. 10a. It may be understood that the descriptions of the RAN are also applicable to that in FIG. 10b to FIG. 10d shown below. Details are not described below.

Optionally, as shown in FIG. 10b, a protocol layer for interaction between a CN TA and a RAN is located above NgAP layer. For example, the CN TA may be an AMF or a network element that has a protocol stack similar to that of the AMF.

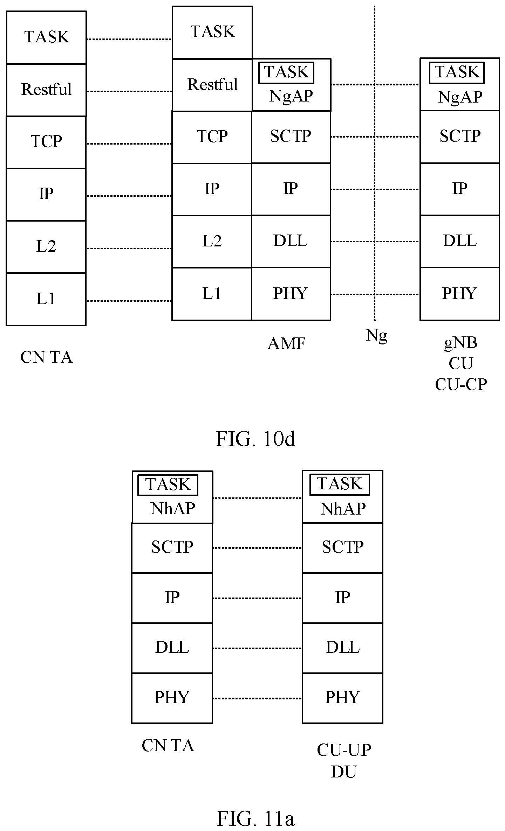

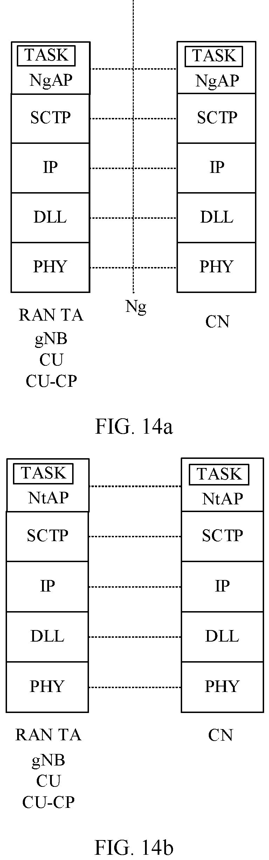

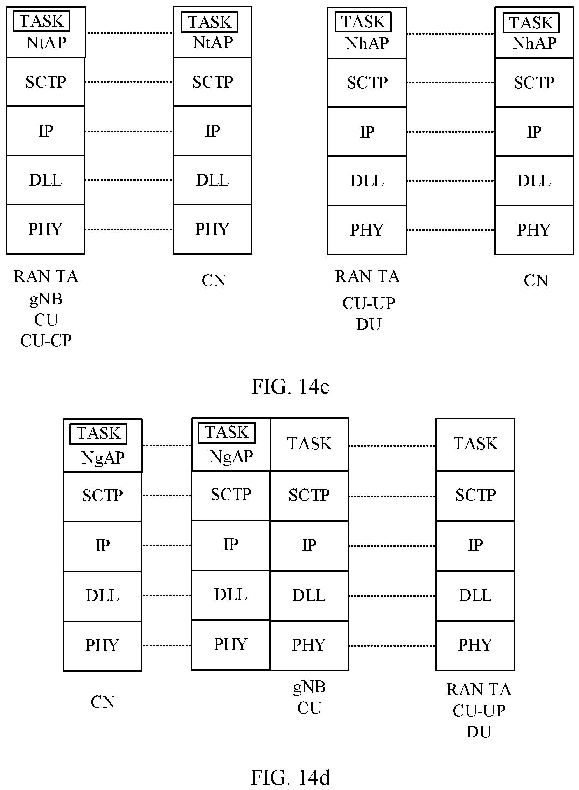

Optionally, as shown in FIG. 10c, a protocol layer for interaction between a CN TA and a RAN is located above SCTP layer. The protocol layer for interaction between the CN TA and the RAN shown in FIG. 10c is shown by using an NtAP protocol layer as an example. The NtAP protocol layer can be used to transmit control signaling related to an AI task, and the like. For example, the CN TA may be an added core network element, for example, a TMF, or a network element that has a protocol stack similar to that shown in FIG. 10c. For example, an interface for interaction between the RAN and the CN TA may be an Nt interface or the like. This is not limited in this embodiment of this application. This description is also applicable to the following (as shown in FIG. 11a, FIG. 14b, FIG. 14c, and the like).

Optionally, as shown in FIG. 10d, a CN TA interacts with a RAN by using an AMF. The CN TA is an added core network element, for example, a TMF, or a network element that has a protocol stack similar to that shown in FIG. 10d. For example, a protocol layer for interaction between the CN TA and the AMF is located above representational state transfer (representational state transfer, RST) layer (which may also be referred to as Restful), and a protocol layer for interaction between the AMF and the RAN is located in NgAP layer. For example, a TASK protocol layer shown in FIG. 10d may also be referred to as a T1AP protocol layer, and an interface for interaction between the CN TA and the AMF is referred to as a T1 interface. The Task is designed based on a service-based interface. This is more flexible. It may be understood that specific descriptions of a layer 1 (layer 1, L1), a layer 2 (layer 2, L2), an IP, and a transmission control protocol (transmission control protocol, TCP) that are included in a protocol stack of an SBA are not described in detail.

Optionally, as shown in FIG. 11a, a protocol layer for interaction between a CN TA and a RAN is located above SCTP layer. For example, the CN TA may be an AMF or a network element that has a similar protocol stack. Alternatively, the CN TA may be an added core network element, for example, a TMF. The RAN may be a CU-UP and/or a DU or another network element that has a protocol stack similar to that shown in FIG. 11a. A protocol layer for interaction between the CN TA and the RAN shown in FIG. 11a is shown by using an NhAP protocol layer as an example. The NhAP protocol layer can be used to transmit control signaling related to an AI task, and the like. Optionally, the protocol layer for interaction between the CN TA and the RAN may also be referred to as an NtAP protocol layer or the like. Alternatively, if the NtAP shown in FIG. 10c is referred to as Nt1AP, the NtAP shown in FIG. 11a may be referred to as Nt2AP. The NtAP shown in FIG. 10c may be the same as or different from that shown in FIG. 11a. This is not limited in this embodiment of this application.

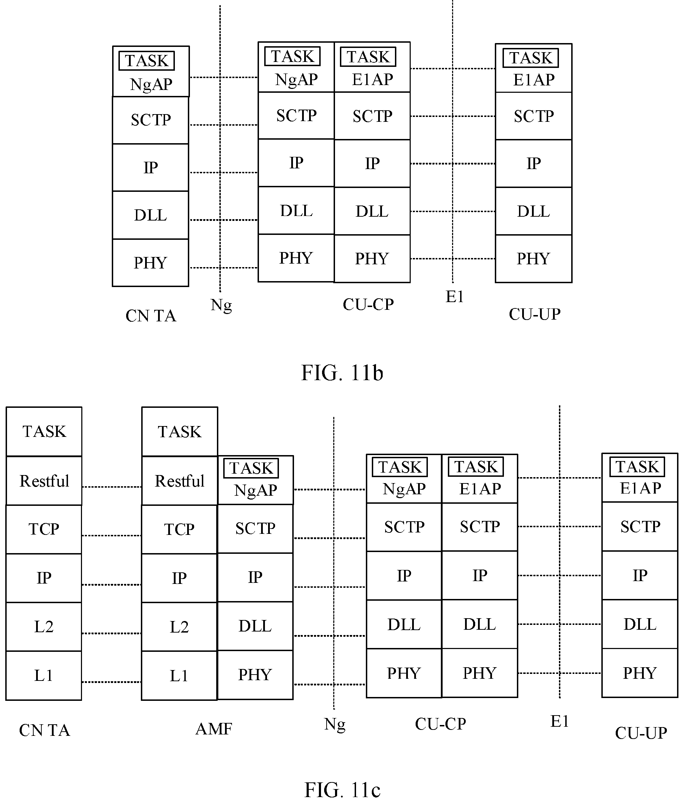

Optionally, as shown in FIG. 11b, a CN TA interacts with a CU-UP by using a CU-CP. The CN TA may be an AMF or a network element that has a similar protocol stack. For example, a protocol layer for interaction between the AMF and the CU-CP is located in NgAP layer, and a protocol layer for interaction between the CU-CP and the CU-UP is located in E1AP layer. Alternatively, a protocol layer for interaction between the AMF and the CU-CP is located above the NgAP layer, and a protocol layer for interaction between the CU-CP and the CU-UP is located above the E1AP layer (not shown in FIG. 11b). To be specific, in this implementation, an Ng interface and an E1 interface may be reused, and a forwarding function, for example, transparent forwarding or parsing and forwarding (that is, a message may be parsed and re-encapsulated), is added in the CU-CP.

Optionally, as shown in FIG. 11c, a CN TA may interact with a CU-UP by using an AMF and a CU-CP. The CN TA may be an added core network element, for example, a TMF. For interaction between the AMF and the CU-CP and interaction between the CU-CP and the CU-UP, refer to FIG. 11b. Details are not described herein. For example, a protocol layer for interaction between the CN TA and the AMF may be located above Restful. For descriptions of the interaction between the CN TA and the AMF, refer to FIG. 10d. Details are not described herein. In this implementation, an interface between a TMF and the AMF, an Ng interface, and an E1 interface may be reused, and a forwarding function (transparent forwarding or parsing and forwarding) is added in the AMF and the CU-CP.

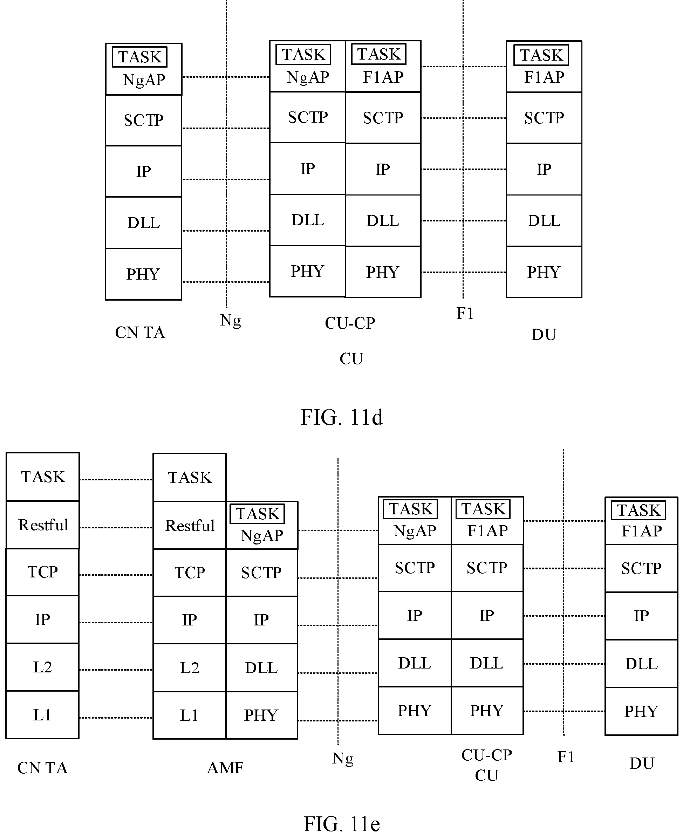

Optionally, as shown in FIG. 11d, a CN TA interacts with a DU by using a CU-CP, or the CN TA interacts with the DU by using a CU. For specific descriptions of FIG. 11d, refer to FIG. 11b. Details are not described herein.

Optionally, as shown in FIG. 11e, a CN TA may interact with a DU by using an AMF and a CU-CP, or the CN TA may interact with the DU by using the AMF and a CU. For specific descriptions of FIG. 11e, refer to FIG. 11c. Details are not described herein.

It may be understood that the foregoing protocol layer for interaction between the CN TA and the RAN is merely an example. During specific implementation, as a protocol stack of the RAN or the CN TA changes, a corresponding protocol layer used to process an AI task may also change, for example, a name changes. For an interface and a protocol layer for interaction between the CN TA and the CN, refer to the interface and the protocol layer for interaction between the CN TA and the AMF shown in FIG. 10d or FIG. 11c. Details are not described herein.

It should be noted that interaction between the first core network device and the UE and interaction between the first access network device and the UE in this embodiment of this application are also applicable to interaction between a second core network device and the UE and interaction between a second access network device and the UE. Interaction between the gNB and the AMF is also applicable to interaction between other network elements of a similar protocol stack, and interaction between the gNB and the UE is also applicable to interaction between other network elements of a similar protocol stack. Details are not listed one by one in this embodiment of this application. The protocol stack between the network elements shown above is merely an example. Any implementation that can be combined with another implementation or two other implementations or the like in different implementations shown above falls within the protection scope of this application.

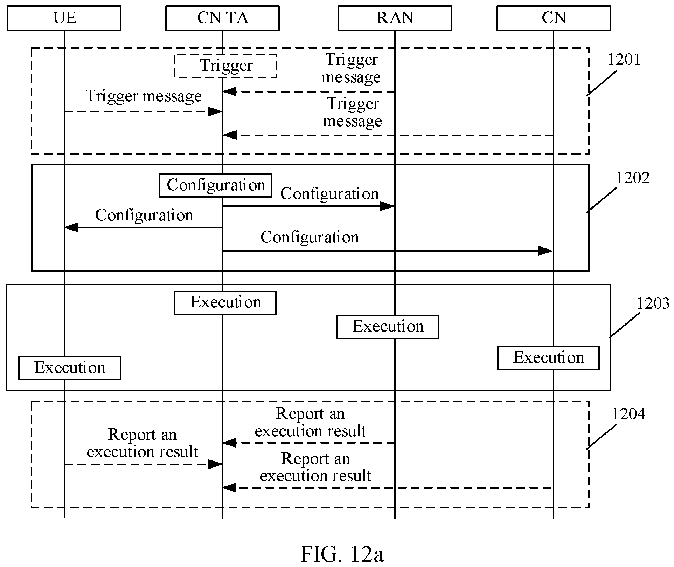

FIG. 12a is a schematic flowchart of a task processing method according to an embodiment of this application. As shown in FIG. 12a, the method includes the following steps.

1201: A CN TA obtains a trigger message, where the trigger message is used to trigger the CN TA to process a first task. Step 1201 shown in FIG. 12a shows triggering or a trigger message as an example.

Optionally, the CN TA may trigger the CN TA to process the first task. In this case, the CN TA may not generate the trigger message, but directly perform step 1202. Optionally, the CN TA may receive a trigger message sent by the trigger node. For a description of the trigger node, refer to the foregoing description of step 301. Details are not described herein. The trigger node shown in FIG. 12a is any one or more of UE, a RAN, or a CN. The RAN may include any one or more of a gNB, a CU, a DU, a CU-CP, or a CU-UP. The CN may include an AMF, a UPF, an SMF, or the like. Alternatively, the trigger node may be a NAMO, an OAM, or the like.

1202: The CN TA determines the first task, and sends a first message. For example, the CN TA determines allocation, decomposition, and the like of the first task, and configures the first task for a corresponding execution node. It may be understood that, the configuration in step 1202 shown in FIG. 12a may be understood as that the CN TA sends the first message to a corresponding node, to configure a task.

Optionally, the CN TA decomposes the first task to obtain a second task, where an execution node of the second task may be the CN TA. Optionally, the execution node of the second task may alternatively be another access network device, for example, a gNB, a CU, a DU, a CU-CP, a CU-UP, or a CN TA. Optionally, the execution node of the second task may be UE. Optionally, the execution node of the second task may be a CN. It may be understood that for descriptions of the execution node, refer to the foregoing descriptions of the second node. Details are not described herein. It may be understood that the trigger node in step 1201 may be the same as or different from the second node in step 1202. This is not limited in this embodiment of this application.

1203: The execution node executes the second task. Step 1203 shown in FIG. 12a shows execution as an example.

1204: The execution node reports an execution result (for example, sends a second message).

Optionally, execution nodes may respectively report respective execution results of the execution nodes to the CN TA. Optionally, the execution nodes may further report the execution results together to another node, and then the another node reports the execution results together to the CN TA. For example, the another node may be indicated to the execution nodes by using the first message. For another example, the trigger node specifies the another node. For another example, the another node may be preconfigured, for example, preconfigured in a protocol, preconfigured by an OAM, or the like. Optionally, the CN TA may send a combined execution result to the trigger node, or the CN TA may directly apply the execution result locally, or the like. This is not limited in this embodiment of this application.

It may be understood that after obtaining the execution result, the execution node may alternatively not report the execution result, but directly apply the execution result locally. This is not limited in this embodiment of this application.

In this embodiment of this application, the CN TA decomposes and/or allocates the AI task, and the like. Because the CN TA may manage and control one or more access networks, the CN TA may manage and control a relatively large quantity of execution nodes and/or forwarding nodes.

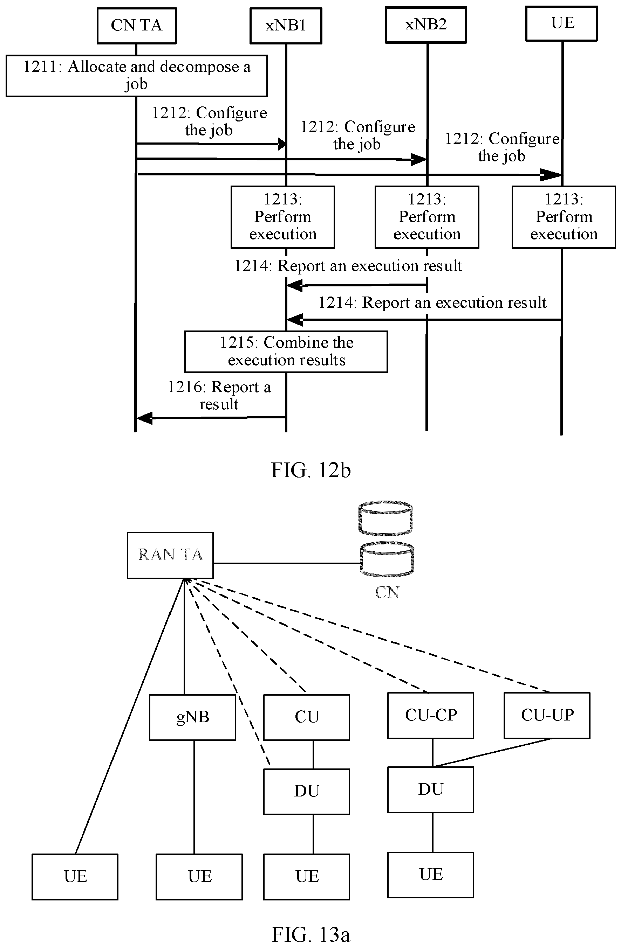

The following uses an example shown in FIG. 12b to describe the task processing method provided in embodiments of this application. It may be understood that xNB1 and xNB2 in FIG. 12b may be understood as RANs. In addition, FIG. 12b shows only two xNBs such as an xNB 1 and an xNB 2 and one UE. During specific implementation, a CN TA may allocate a task (a job shown in FIG. 12b) to more or fewer xNBs and UEs or the like based on a resource status of the task. This is not limited in this embodiment of this application. As shown in FIG. 12b, the task processing method includes the following steps.

1211: The CN TA determines a first task (as shown in FIG. 12b, the job is used as an example), for example, allocates and decomposes the job.

For example, the CN TA decomposes the job to obtain one or more subtasks. As shown in FIG. 12b, the CN TA may decompose the job into three subtasks, and respectively allocate the three subtasks to the xNB1, the xNB2, and the UE.

1212: The CN TA configures the job for the xNB1, xNB2, and UE.

1213: The xNB1 executes the job allocated by the CN TA, the xNB2 executes the job allocated by the CN TA, and the UE executes the job allocated by the CN TA.

1214: The xNB2 and the UE report execution results.

1215: The xNB1 combines the execution results.

It may be understood that FIG. 12b shows an example in which an execution result is reported by using a specified node, and should not be construed as a limitation on this embodiment of this application.

1216: The xNB1 reports the combined execution result to the CN TA.

It may be understood that step 1206 shown in FIG. 12b is shown by using result reporting as an example, and should not be construed as a limitation on this embodiment of this application.

It may be understood that for specific descriptions of FIG. 12b, refer to the foregoing related descriptions of FIG. 3. Details are not described herein.

In this embodiment of this application, the first task may be any one of a collaborative computing task, a collaborative inference task, a collaborative training task, a collaborative sensing task, or the like. A type of the first task is not limited in this embodiment of this application. For example, the CN TA may decompose a collaborative inference task into one xNB and a plurality of UEs. For another example, the CN TA may decompose a task into one xNB and a plurality of UEs to perform federated learning together. For another example, the CN TA may decompose a large sensing task into a plurality of xNBs and a plurality of UEs to perform the sensing task together. Sensing, as a new application of 5G and 6G, gives a base station more functions and values. For example, the base station may sense information such as an environment, a channel, and a building around the base station through terahertz imaging. Alternatively, the base station may have a function similar to a radar, and can track information (such as a location, an angle, a distance, and a moving speed) of a moving object/target in real time through radar wave reflection. However, because a sensing capability of a single base station is limited, sometimes sensing information of a larger area needs to be obtained. In this case, a task needs to be decomposed to more base stations for sensing. In addition, because a geographical location of the base station is fixed, if a large quantity of UEs can also participate in the task for joint sensing, sensing information can be enriched and sensing accuracy can be improved. For the collaborative sensing task, the CN TA may allocate the job to more xNBs and more UEs. For the collaborative training task, when receiving execution results of the xNB2 and the UE, the xNB1 may update a model based on the two execution results, to report a final result to the CN TA.

The following describes the task processing method provided in this embodiment of this application by using an example in which the first node includes a RAN TA. For example, the RAN TA may implement the method shown in FIG. 3.

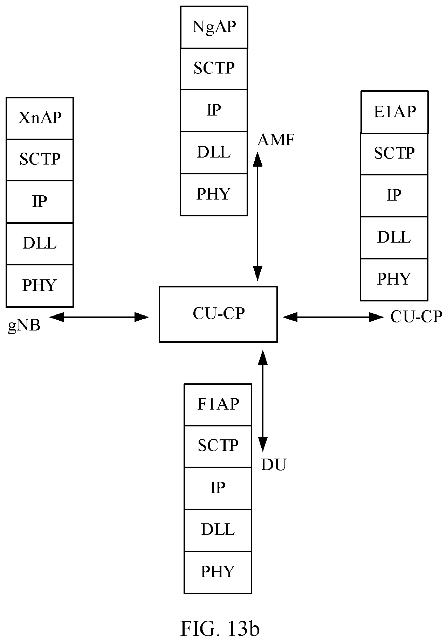

FIG. 13a is a schematic diagram of interaction between different network elements according to an embodiment of this application. Therefore, the following uses FIG. 13a as an example to describe an interface and a protocol layer between the RAN TA and another network element. In the following, Case 1 shows an interface and a protocol layer that are used when a RAN TA interacts with UE. Case 2 shows an interface and a protocol layer for interaction between the RAN TA and a CN. A function (TASK) layer in a protocol stack shown below represents a protocol layer that can process an AI-related task and that is improved in this embodiment of this application. In addition, a name of the TASK shown below is merely an example, and the name is not limited in this embodiment of this application. It may be understood that a solid line part shown in FIG. 13a indicates that there may be a corresponding interface between two network elements, as shown in FIG. 2d; and a dashed line part shown in FIG. 13a indicates that there may be no corresponding interface between two network elements. As shown in FIG. 13b, an interface between a gNB and a CU-CP is an Xn interface, corresponding to an XnAP protocol layer; an interface between the CU-CP and a DU is an F1 interface, corresponding to an F1AP protocol layer; an interface between the CU-CP and a CU-UP is an E1 interface, corresponding to an E1AP protocol layer; and an interface between the CU-CP and an AMF is an Ng interface, corresponding to an NgAP protocol layer. It may be understood that for descriptions of an interface and a protocol layer between different network elements, refer to FIG. 2d. Details are not described herein.

### Case 1

Optionally, a protocol layer for interaction between a RAN TA and UE is located above RRC layer.

Optionally, a protocol layer for interaction between a RAN TA and UE is located in RRC layer.

Optionally, a protocol layer for interaction between a RAN TA and UE is located above SDAP layer.

Optionally, a protocol layer for interaction between a RAN TA and UE is located in SDAP layer.

### Case 2

Optionally, as shown in FIG. 14a, a protocol layer for interaction between a RAN TA and a CN is located in NgAP layer. For this description, refer to FIG. 10a. Details are not described herein. It may be understood that the RAN TA may include any one or more of a gNB, a CU, or a CU-CP. The CN may include an AMF, a UPF, or the like.

Optionally, the protocol layer for interaction between the RAN TA and the CN is located above the NgAP layer (not shown in the figure). For this description, refer to FIG. 10b. Details are not described herein.

Optionally, as shown in FIG. 14b, a protocol layer for interaction between a RAN TA and a CN is located above SCTP layer. The protocol layer for interaction between the CN and the RAN TA shown in FIG. 14b is shown by using an NtAP protocol layer as an example. The NtAP protocol layer can be used to transmit control signaling related to an AI task, and the like. For example, the CN may be an added core network element. For another example, the CN may be an AMF, a UPF, or a network element that has a protocol stack similar to that shown in FIG. 14b.

Optionally, as shown in FIG. 14c, a protocol layer for interaction between a RAN TA and a CN is located above SCTP layer. For this description, refer to FIG. 10c or FIG. 11a. Details are not described herein. For example, the RAN TA may include any one or more of a gNB, a CU, a CU-CP, a DU, and a CU-UP.

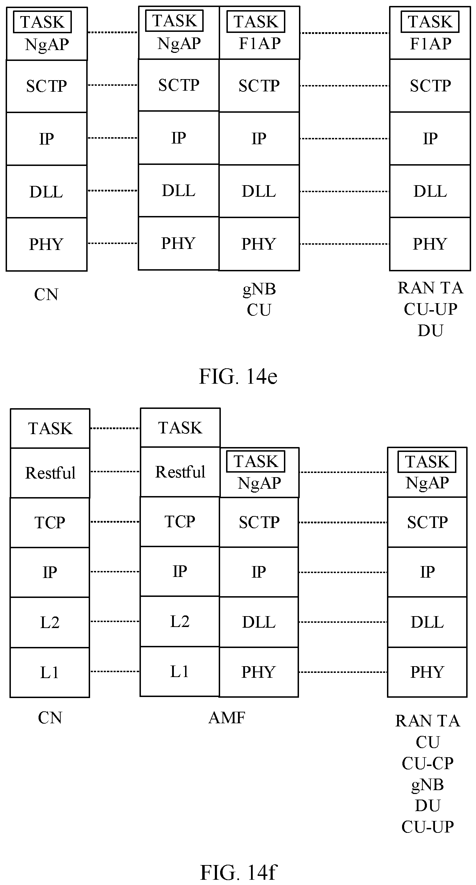

Optionally, the RAN TA interacts with another CN by using the gNB or the CU. As shown in FIG. 14d, a protocol layer for interaction between a RAN TA and a gNB or a CU is located above SCTP layer, and a protocol layer for interaction between the gNB or the CU and a CN is located in NgAP layer. It may be understood that the CN shown in FIG. 14d may include an AMF or a UPF. Alternatively, when the AMF or the UPF needs to interact with another core network element, the AMF or the UPF may interact with the another core network element through a CN interface. Optionally, as shown in FIG. 14e, a protocol layer for interaction between a RAN TA and a gNB or a CU is located in F1AP layer, and a protocol layer for interaction between the gNB or the CU and a CN is located in NgAP layer. The RAN TA shown in FIG. 14d and FIG. 14e may include a CU-UP and/or a DU, and the CN may include an AMF, a UPF, or another network element that has a similar protocol stack.

Optionally, the RAN TA may alternatively interact with the CN by using the AMF. As shown in FIG. 14f, for example, when a RAN TA includes any one or more of a gNB, a CU, or a CU-CP, the RAN TA may interact with another network element in a core network by using an AMF. A protocol layer for interaction between the RAN TA and the AMF is located above SCTP layer. FIG. 14f is shown by using NgAP as an example, but should not be understood as a limitation on embodiments of this application. A protocol layer (TASK shown in FIG. 14f) for interaction between the AMF and another core network element may be located above Restful. It may be understood that the AMF may alternatively interact with the another core network element through a CN interface. Details are not listed one by one herein.

For an interface and a protocol layer for interaction between the RAN TA and a RAN, refer to FIG. 14d or FIG. 14e. Details are not described herein.

It may be understood that for specific descriptions of the protocol stack for interaction between the RAN TA and the CN, refer to the foregoing protocol stack for interaction between the CN TA and the RAN.

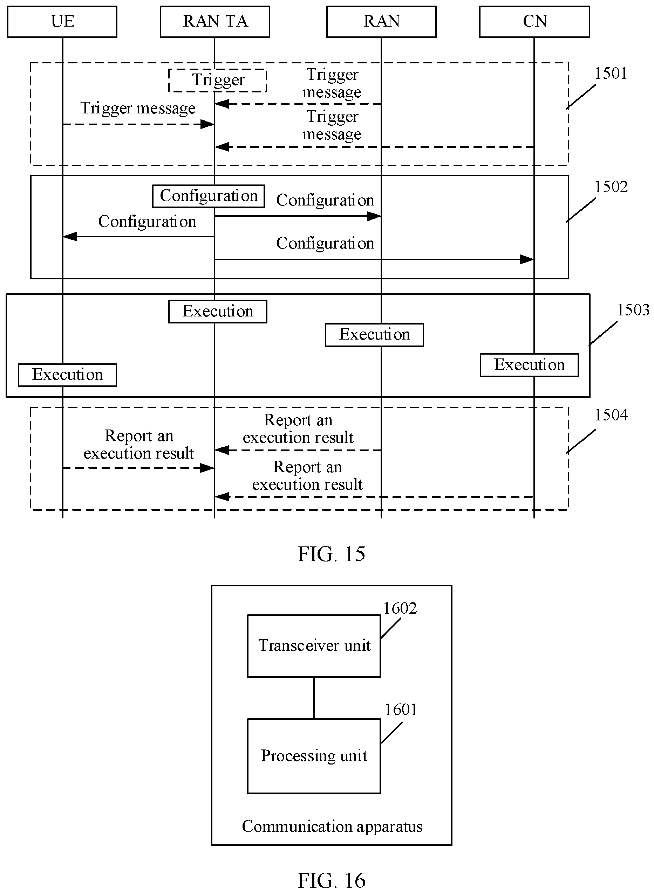

FIG. 15 is a schematic flowchart of a task processing method according to an embodiment of this application. As shown in FIG. 15, the method includes the following steps.

1501: ARAN TA obtains a trigger message, where the trigger message is used to trigger the RAN TA to process a first task. Step 1501 shown in FIG. 15 shows an example of triggering or a trigger message.

1502: The RAN TA determines the first task, and sends a first message. For example, the RAN TA determines allocation, decomposition, and the like of the first task, and configures the first task for a corresponding execution node. It may be understood that the configuration in step 1502 shown in FIG. 15 may be understood as that the RAN TA sends the first message to a corresponding node, to configure a task.

1503: The execution node executes a second task. For example, step 1503 shown in FIG. 15 shows execution.

1504: The execution node reports an execution result (for example, sends a second message).

It may be understood that for specific descriptions of the method shown in FIG. 15, refer to FIG. 12a and/or FIG. 12b. Details are not described herein. For example, the execution result may be reported, or the execution result may not be reported.

In this embodiment of this application, the RAN TA decomposes and/or allocates the AI task, and the like, so that an interface between different network elements in an access network can be effectively used.

A communication apparatus provided in an embodiment of this application is described below.

In this application, the communication apparatus is divided into function modules based on the foregoing method embodiments. For example, each function module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The following describes in detail communication apparatuses in embodiments of this application with reference to FIG. 16 to FIG. 18.

FIG. 16 is a schematic diagram of a structure of a communication apparatus according to an embodiment of this application. As shown in FIG. 16, the communication apparatus includes a processing unit 1601 and a transceiver unit 1602.

In some embodiments of this application, the communication apparatus may be the first node, a chip in the first node, or the like shown above. To be specific, the communication apparatus may be configured to perform the steps, the functions, or the like performed by the first node in the foregoing method embodiments.

The processing unit 1601 is configured to determine a first task, where the communication apparatus includes a first core network device or a first access network device, and the first task is a task related to artificial intelligence AI.

The transceiver unit 1602 is configured to send a first message, where the first message includes identification information of a second task and/or configuration information of the second task, the second task is a subtask of the first task, the second task is executed by a second node, and the second node is one of nodes that are determined by the communication apparatus and that are configured to execute the first task.

In this embodiment of this application, for descriptions of the first task, the first message, the first node, the second node, and the like, refer to the descriptions in the foregoing method embodiments. Details are not described herein.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein. The steps performed by the first node are not listed one by one herein.

FIG. 16 is reused. In some other embodiments of this application, the communication apparatus may be the second node, a chip in the second node, or the like shown above. To be specific, the communication apparatus may be configured to perform the steps, the functions, or the like performed by the second node in the foregoing method embodiments.

The transceiver unit 1602 is configured to receive a first message from a first node, where the first message includes identification information of a second task and/or configuration information of the second task, the second task is a subtask of the first task, the first task is a task related to artificial intelligence AI, and the first node includes a first core network device or a first access network device.

The processing unit 1601 is configured to execute the second task.

In this embodiment of this application, for descriptions of the first task, the first message, the first node, the second node, and the like, refer to the descriptions in the foregoing method embodiments. Details are not described herein.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein. The steps performed by the second node are not listed one by one herein. It may be understood that for specific descriptions of the transceiver unit and the processing unit, refer to the descriptions of the fifth aspect and/or the sixth aspect and the like.

The foregoing describes the nodes in embodiments of this application, and the following describes possible product forms of the nodes. It should be understood that any product that has the functions of the nodes described in FIG. 16 falls within the protection scope of embodiments of this application. It should be further understood that the following description is merely an example, and a product form of the node in this embodiment of this application is not limited thereto.

In a possible implementation, in the communication apparatus shown in FIG. 16, the processing unit 1601 may be one or more processors; and the transceiver unit 1602 may be a transceiver or the transceiver unit 1602 may be a sending unit and a receiving unit, the sending unit may be a transmitter, the receiving unit may be a receiver, and the sending unit and the receiving unit are integrated into one device, for example, a transceiver. In this embodiment of this application, the processor and the transceiver may be coupled, or the like. A manner of connection between the processor and the transceiver is not limited in this embodiment of this application.

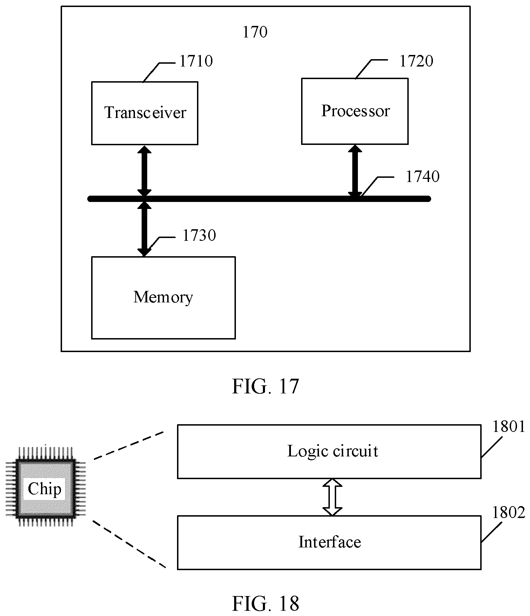

As shown in FIG. 17, a communication apparatus 170 includes one or more processors 1720 and a transceiver 1710.

For example, when the communication apparatus is configured to implement the steps, the methods, or the functions performed by the first node, the processor 1720 is configured to determine a first task, where the communication apparatus includes a first core network device or a first access network device, and the first task is a task related to artificial intelligence AI. The transceiver 1710 is configured to send a first message, where the first message includes identification information of a second task and/or configuration information of the second task, the second task is a subtask of the first task, the second task is executed by a second node, and the second node is one of nodes that are determined by the communication apparatus and that are configured to execute the first task.

For example, when the communication apparatus is configured to implement the steps, the methods, or the functions performed by the second node, the transceiver 1710 is configured to receive a first message from a first node, where the first message includes identification information of a second task and/or configuration information of the second task, the second task is a subtask of the first task, the first task is a task related to artificial intelligence AI, and the first node includes a first core network device or a first access network device.

It may be understood that for specific descriptions of the processor and the transceiver, refer to the descriptions of the processing unit and the transceiver unit shown in FIG. 16, or refer to the foregoing method embodiments. Details are not described herein.

In various implementations of the communication apparatus shown in FIG. 17, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the communication apparatus 170 may further include one or more memories 1730, configured to store program instructions and/or data. The memory 1730 is coupled to the processor 1720. The coupling in this embodiment of this application may be an indirect coupling or a communication connection between apparatuses, units, or modules in an electrical form, a mechanical form, or another form, and is used for information exchange between the apparatuses, the units, or the modules. The processor 1720 may cooperate with the memory 1730 to perform an operation. The processor 1720 may execute the program instructions stored in the memory 1730. Optionally, at least one of the one or more memories may be included in the processor.

A specific connection medium between the transceiver 1710, the processor 1720, and the memory 1730 is not limited in this embodiment of this application. In this embodiment of this application, the memory 1730, the processor 1720, and the transceiver 1710 are connected through a bus 1740 in FIG. 17. The bus is denoted by using a bold line in FIG. 17. A manner of connection between other components is merely an example for description, and cannot be construed as a limitation. The bus may be classified into an address bus, a data bus, a control bus, and the like. For ease of representation, only one bold line is used to represent the bus in FIG. 17, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of instructions or a data structure and that can be read and/or written by a computer (for example, the communication apparatus shown in this application). However, this application is not limited thereto. The memory in this embodiment of this application may alternatively be a circuit or any other apparatus that can implement a storage function, and is configured to store the program instructions and/or the data.

The processor 1720 is mainly configured to: process a communication protocol and communication data, control an entire communication apparatus, execute a software program, and process data of the software program. The memory 1730 is mainly configured to store the software program and the data. The transceiver 1710 may include a control circuit and an antenna. The control circuit is mainly configured to: perform a conversion between a baseband signal and a radio frequency signal, and process the radio frequency signal. The antenna is mainly configured to receive and send a radio frequency signal in a form of an electromagnetic wave. An input/output apparatus, for example, a touchscreen, a display, or a keyboard, is mainly configured to: receive data input by a user and output data to the user.

For example, after the communication apparatus is powered on, the processor 1720 may read the software program in the memory 1730, interpret and execute instructions of the software program, and process the data of the software program. When the data needs to be sent wirelessly, the processor 1720 performs baseband processing on the to-be-sent data, and outputs a baseband signal to a radio frequency circuit. The radio frequency circuit performs radio frequency processing on the baseband signal, and then sends out the radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1720, and the processor 1720 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 17, or the like. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 16, the processing unit 1601 may be one or more logic circuits, and the transceiver unit 1602 may be an input/output interface, or may be referred to as a communication interface, an interface circuit, an interface, or the like. Alternatively, the transceiver unit 1602 may include a sending unit and a receiving unit. The sending unit may be an output interface, and the receiving unit may be an input interface. The sending unit and the receiving unit are integrated into one unit, for example, an input/output interface. As shown in FIG. 18, the communication apparatus shown in FIG. 18 includes a logic circuit 1801 and an interface 1802. That is, the processing unit 1601 may be implemented by using the logic circuit 1801, and the transceiver unit 1602 may be implemented by using the interface 1802. The logic circuit 1801 may be a chip, a processing circuit, an integrated circuit, a system on chip (system on chip, SoC), or the like. The interface 1802 may be a communication interface, an input/output interface, a pin, or the like. For example, in FIG. 18, the foregoing communication apparatus is shown by using a chip as an example, and the chip includes a logic circuit 1801 and an interface 1802.

In this embodiment of this application, the logic circuit and the interface may be further coupled to each other. A specific manner of connection between the logical circuit and the interface is not limited in this embodiment of this application.

For example, when the communication apparatus is configured to implement the methods, the functions, or the steps performed by the first node, the logic circuit 1801 is configured to determine a first task, and the interface 1802 is configured to output a first message.

For example, when the communication apparatus is configured to implement the methods, the functions, or the steps performed by the second node, the interface 1802 is configured to input a first message, and the logic circuit 1801 is configured to execute a second task.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of the embodiments shown in FIG. 18, refer to the foregoing embodiments. Details are not described herein.

An embodiment of this application further provides a wireless communication system. The wireless communication system includes a second node and a first node. The second node and the first node may be configured to perform the method in any one of the foregoing embodiments.

In addition, this application further provides a computer program. The computer program is configured to implement the operations and/or the processing performed by the second node in the method provided in this application.

This application further provides a computer program. The computer program is configured to implement the operations and/or the processing performed by the first node in the method provided in this application.

This application further provides a computer-readable storage medium. The computer-readable storage medium stores computer code. When the computer code is run on a computer, the computer is enabled to perform the operations and/or the processing performed by the second node in the method provided in this application.

This application further provides a computer-readable storage medium. The computer-readable storage medium stores computer code. When the computer code is run on a computer, the computer is enabled to perform the operations and/or the processing performed by the first node in the method provided in this application.

This application further provides a computer program product. The computer program product includes computer code or a computer program. When the computer code or the computer program is run on a computer, the operations and/or the processing performed by the second node in the method provided in this application is enabled to be performed.

This application further provides a computer program product. The computer program product includes computer code or a computer program. When the computer code or the computer program is run on a computer, the operations and/or the processing performed by the first node in the method provided in this application is enabled to be performed.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The software product is stored in a storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A task processing method, wherein the method comprises:
determining, by a first node, a first task, wherein the first node comprises a first core network device or a first access network device, and the first task is a task related to artificial intelligence Al; and
sending, by the first node, a first message to a second node, wherein the first message comprises identification information of a second task and/or configuration information of the second task, the second task is a subtask of the first task, and the second node is one of nodes that are determined by the first node and that are configured to execute the first task.

2. The method according to claim 1, wherein when the first node comprises the first core network device, the second node comprises any one or more of a second core network device, a second access network device, or a terminal device; or
when the first node comprises the first access network device, the second node comprises any one or more of a second access network device, a second core network device, or a terminal device.

3. The method according to claim 2, wherein the second access network device comprises one or more of the following: a base station, a central unit CU, a distributed unit DU, a central unit-control plane CU-CP, and a central unit-user plane CU-UP; and/or
the second core network device comprises one or more of the following: an access and mobility management function AMF, a session management function SMF, a user plane function UPF, a network exposure function NEF, a network repository function NRF, a policy control function PCF, unified data management UDM, an application function AF, and an authentication server function AUSF.

4. The method according to any one of claims 1 to 3, wherein a protocol layer for interaction between the first core network device and the second access network device is located in an Ng interface application protocol NgAP layer, or is located above the NgAP layer;
a protocol layer for interaction between the first core network device and the second access network device is located above a stream control transmission protocol SCTP layer; or
a protocol layer for interaction between the first core network device and the access and mobility management function AMF is located above representational state transfer RST layer, and a protocol layer for interaction between the AMF and the second access network device is located in NgAP layer, or is located above the NgAP layer.

5. The method according to any one of claims 1 to 3, wherein a protocol layer for interaction between the first access network device and the second core network device is located in an Ng interface application protocol NgAP layer, or is located above the NgAP layer; or
a protocol layer for interaction between the first access network device and the second core network device is located above a stream control transmission protocol SCTP layer.

6. The method according to any one of claims 1 to 5, wherein the first message further comprises identification information of the first task.

7. The method according to any one of claims 1 to 6, wherein a type of the first task comprises any one or more of the following:
an inference task, a training task, a learning task, a computing task, or a sensing task.

8. The method according to any one of claims 1 to 7, wherein the determining, by a first node, a first task comprises:
determining, by the first node, any one or more of life cycle information of the first task, resource information of the first task, allocation information of the first task, or decomposition information of the first task.

9. The method according to claim 8, wherein
the life cycle information of the first task comprises any one or more of the following: addition of the first task, modification of the first task, querying of the first task, reporting of the first task, migration of an execution node of the first task, and migration of a management node of the first task;
the resource information of the first task comprises any one or more of the following: computing power of the first task, an algorithm of the first task, data of the first task, or a connection of the first task;
the allocation information of the first task comprises any one or more of the following: allocation of an execution node of the first task, allocation of an execution type of the execution node of the first task, and resource allocation of the execution node of the first task; and/or
the decomposition information of the first task comprises any one or more of the following: a quantity of tasks obtained by decomposing the first task and computing power decomposition of the first task.

10. The method according to any one of claims 1 to 9, wherein the determining, by a first node, a first task comprises:
determining, by the first node, at least two second tasks of the first task, wherein the at least two second tasks correspond to at least two second nodes, and execution types of the at least two second nodes are coordinated execution, or execution types of the at least two second nodes are single-point execution.

11. The method according to any one of claims 1 to 10, wherein the method further comprises any one or more of the following:
receiving, by the first node, capability information from the second node, wherein the capability information indicates a capability of the second node to execute a task;
sending, by the first node, a resource configuration request to the second node, wherein the resource configuration request is used to request to perform resource configuration on the second task;
receiving, by the first node, a second message, wherein the second message indicates an execution result of the second task; or
receiving, by the first node, at least two second messages, and combining execution results of the first task based on the at least two second messages, wherein the second message indicates an execution result of the second task.

12. A task processing method, wherein the method comprises:
receiving, by a second node, a first message from a first node, wherein the first message comprises identification information of a second task and/or configuration information of the second task, the second task is a subtask of the first task, the second node is one of nodes that are determined by the first node and that are configured to execute the first task, the first task is a task related to artificial intelligence AI, and the first node comprises a first core network device or a first access network device; and
executing, by the second node, the second task.

13. The method according to claim 12, wherein when the first node comprises the first core network device, the second node comprises any one or more of a second core network device, a second access network device, or a terminal device; or
when the first node comprises the first access network device, the second node comprises any one or more of a second access network device, a second core network device, or a terminal device.

14. The method according to claim 13, wherein the second access network device comprises one or more of the following: a base station, a central unit CU, a distributed unit DU, a central unit-control plane CU-CP, and a central unit-user plane CU-UP; and
the second core network device comprises one or more of the following: an access and mobility management function AMF, a session management function SMF, a user plane function UPF, a network exposure function NEF, a network repository function NRF, a policy control function PCF, unified data management UDM, an application function AF, and an authentication server function AUSF.

15. The method according to any one of claims 12 to 14, wherein a protocol layer for interaction between the first core network device and the second access network device is located in an Ng interface application protocol NgAP layer, or is located above the NgAP layer;
a protocol layer for interaction between the first core network device and the second access network device is located above a stream control transmission protocol SCTP layer; or
a protocol layer for interaction between the first core network device and the access and mobility management function AMF is located above representational state transfer RST layer, and a protocol layer for interaction between the AMF and the second access network device is located in NgAP layer, or is located above the NgAP layer.

16. The method according to any one of claims 12 to 14, wherein a protocol layer for interaction between the first access network device and the second core network device is located in an Ng interface application protocol NgAP layer, or is located above the NgAP layer; or
a protocol layer for interaction between the first access network device and the second core network device is located above a stream control transmission protocol SCTP layer.

17. The method according to any one of claims 12 to 16, wherein the method further comprises any one or more of the following:
sending, by the second node, capability information to the first node, wherein the capability information indicates a capability of the second node to execute a task;
receiving, by the second node, a resource configuration request from the first node, wherein the resource configuration request is used to request to perform resource configuration on the second task; or
sending, by the second node, a second message to the first node, wherein the second message indicates an execution result of the second task.

18. A communication apparatus, wherein the apparatus comprises a processing unit, and the processing unit is configured to perform the method according to any one of claims 1 to 11.

19. A communication apparatus, wherein the apparatus comprises a processing unit, and the processing unit is configured to perform the method according to any one of claims 12 to 17.

20. A communication apparatus, comprising a processor and a memory, wherein
the memory is configured to store instructions; and
the processor is configured to execute the instructions, to enable the method according to any one of claims 1 to 17 to be performed.

21. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 17, to obtain processed data, and the interface is configured to output the processed data.

22. A computer-readable storage medium, wherein the computer-readable storage medium is configured to store a computer program, and when the computer program is executed, the method according to any one of claims 1 to 17 is performed.

23. A communication apparatus, wherein the apparatus comprises:
a processing unit, configured to determine a first task, wherein the communication apparatus comprises a first core network device or a first access network device, and the first task is a task related to artificial intelligence AI; and
a transceiver unit, configured to send a first message to a second node, wherein the first message comprises identification information of a second task and/or configuration information of the second task, the second task is a subtask of the first task, and the second node is one of nodes that are determined by the communication apparatus and that are configured to execute the first task.

24. The apparatus according to claim 23, wherein when the communication apparatus comprises the first core network device, the second node comprises any one or more of a second core network device, a second access network device, or a terminal device; or
when the communication apparatus comprises the first access network device, the second node comprises any one or more of a second access network device, a second core network device, or a terminal device.

25. The apparatus according to claim 24, wherein the second access network device comprises one or more of the following: a base station, a central unit CU, a distributed unit DU, a central unit-control plane CU-CP, and a central unit-user plane CU-UP; and/or
the second core network device comprises one or more of the following: an access and mobility management function AMF, a session management function SMF, a user plane function UPF, a network exposure function NEF, a network repository function NRF, a policy control function PCF, unified data management UDM, an application function AF, and an authentication server function AUSF.

26. The apparatus according to any one of claims 23 to 25, wherein a protocol layer for interaction between the first core network device and the second access network device is located in an Ng interface application protocol NgAP layer, or is located above the NgAP layer;
a protocol layer for interaction between the first core network device and the second access network device is located above a stream control transmission protocol SCTP layer; or
a protocol layer for interaction between the first core network device and the access and mobility management function AMF is located above representational state transfer RST layer, and a protocol layer for interaction between the AMF and the second access network device is located in NgAP layer, or is located above the NgAP layer.

27. The apparatus according to any one of claims 23 to 25, wherein a protocol layer for interaction between the first access network device and the second core network device is located in an Ng interface application protocol NgAP layer, or is located above the NgAP layer; or
a protocol layer for interaction between the first access network device and the second core network device is located above a stream control transmission protocol SCTP layer.

28. The apparatus according to any one of claims 23 to 27, wherein the first message further comprises identification information of the first task.

29. The apparatus according to any one of claims 23 to 28, wherein a type of the first task comprises any one or more of the following:
an inference task, a training task, a learning task, a computing task, or a sensing task.

30. The apparatus according to any one of claims 23 to 29, wherein the processing unit is specifically configured to determine any one or more of life cycle information of the first task, resource information of the first task, allocation information of the first task, or decomposition information of the first task.

31. The apparatus according to claim 30, wherein
the life cycle information of the first task comprises any one or more of the following: addition of the first task, modification of the first task, querying of the first task, reporting of the first task, migration of an execution node of the first task, and migration of a management node of the first task;
the resource information of the first task comprises any one or more of the following: computing power of the first task, an algorithm of the first task, data of the first task, or a connection of the first task;
the allocation information of the first task comprises any one or more of the following: allocation of an execution node of the first task, allocation of an execution type of the execution node of the first task, and resource allocation of the execution node of the first task; and/or
the decomposition information of the first task comprises any one or more of the following: a quantity of tasks obtained by decomposing the first task and computing power decomposition of the first task.

32. The apparatus according to any one of claims 23 to 31, wherein the processing unit is specifically configured to determine at least two second tasks of the first task, wherein the at least two second tasks correspond to at least two second nodes, and execution types of the at least two second nodes are coordinated execution, or execution types of the at least two second nodes are single-point execution.

33. The apparatus according to any one of claims 23 to 32, wherein the transceiver unit is further configured to receive capability information from the second node, wherein the capability information indicates a capability of the second node to execute a task;
the transceiver unit is further configured to send a resource configuration request to the second node, wherein the resource configuration request is used to request to perform resource configuration on the second task;
the transceiver unit is further configured to receive a second message, wherein the second message indicates an execution result of the second task; or
the transceiver unit is further configured to receive at least two second messages, and combine execution results of the first task based on the at least two second messages, wherein the second message indicates an execution result of the second task.

34. A communication apparatus, wherein the apparatus comprises:
a transceiver unit, configured to receive a first message from a first node, wherein the first message comprises identification information of a second task and/or configuration information of the second task, the second task is a subtask of the first task, the communication apparatus is one of nodes that are determined by the first node and that are configured to execute the first task, the first task is a task related to artificial intelligence AI, and the first node comprises a first core network device or a first access network device; and
a processing unit, configured to execute the second task.

35. The apparatus according to claim 34, wherein when the first node comprises the first core network device, the communication apparatus comprises any one or more of a second core network device, a second access network device, or a terminal device; or
when the first node comprises the first access network device, the communication apparatus comprises any one or more of a second access network device, a second core network device, or a terminal device.

36. The apparatus according to claim 35, wherein the second access network device comprises one or more of the following: a base station, a central unit CU, a distributed unit DU, a central unit-control plane CU-CP, and a central unit-user plane CU-UP; and
the second core network device comprises one or more of the following: an access and mobility management function AMF, a session management function SMF, a user plane function UPF, a network exposure function NEF, a network repository function NRF, a policy control function PCF, unified data management UDM, an application function AF, and an authentication server function AUSF.

37. The apparatus according to any one of claims 34 to 36, wherein a protocol layer for interaction between the first core network device and the second access network device is located in an Ng interface application protocol NgAP layer, or is located above the NgAP layer;
a protocol layer for interaction between the first core network device and the second access network device is located above a stream control transmission protocol SCTP layer; or
a protocol layer for interaction between the first core network device and the access and mobility management function AMF is located above representational state transfer RST layer, and a protocol layer for interaction between the AMF and the second access network device is located in NgAP layer, or is located above the NgAP layer.

38. The apparatus according to any one of claims 34 to 36, wherein a protocol layer for interaction between the first access network device and the second core network device is located in an Ng interface application protocol NgAP layer, or is located above the NgAP layer; or
a protocol layer for interaction between the first access network device and the second core network device is located above a stream control transmission protocol SCTP layer.

39. The apparatus according to any one of claims 34 to 38, wherein the transceiver unit is further configured to send capability information to the first node, wherein the capability information indicates a capability of the communication apparatus to execute a task;
the transceiver unit is further configured to receive a resource configuration request from the first node, wherein the resource configuration request is used to request to perform resource configuration on the second task; or
the transceiver unit is further configured to send a second message to the first node, wherein the second message indicates an execution result of the second task.

40. A computer program, wherein when the computer program is executed, the method according to any one of claims 1 to 17 is performed.

41. A communication system, comprising a first node and a second node, wherein the first node is configured to perform the method according to any one of claims 1 to 11, and the second node is configured to perform the method according to any one of claims 12 to 17.

42. A task processing method, comprising the method according to any one of claims 1 to 11, and the method according to any one of claims 12 to 17.
